# EUROPEAN PATENT APPLICATION

(11) **EP 4 657 151 A1**
(43) Date of publication of application: **03.12.2025**
(21) Application number: 24747413.3
(22) Date of filing: 19.01.2024
(51) Int. Cl.: G03B 3/10, G03B 13/36, G03B 5/04, G03B 17/12, H04N 23/54, H04N 23/55, H02K 33/18

(54) **LENS DRIVING APPARATUS, CAMERA DEVICE, AND OPTICAL DEVICE**

(30) Priority: 26.01.2023 KR 20230010411
(71) Applicant: LG INNOTEK CO. LTD, Gangseo-gu Seoul 07796 (KR)
(72) Inventor: NOH, Yun Ho, Seoul 07796 (KR); KWON, Tae Hoon, Seoul 07796 (KR)
(74) Representative: M. Zardi & Co S.A.
(86) International application number: PCT/KR2024/000988
(87) International publication number: WO 2024/158176

(57) **Abstract**

An embodiment of the present invention relates to a lens driving apparatus comprising: a base; a housing which is disposed on the base; a bobbin which is disposed in the housing; a first ball which is disposed between the housing and the base; a second ball which is disposed between the housing and the bottom of the bobbin; an elastic member which is coupled to the top of the bobbin; and a wire which connects the elastic member and the bottom of the housing to each other.

## Description

### TECHNICAL FIELD

This embodiment relates to a lens driving apparatus, a camera device, and an optical device.

### BACKGROUND ART

A camera device is a device that photographs pictures or videos of a subject and is mounted in optical devices such as smartphones, drones, and vehicles.

The camera device has an auto focus function that automatically adjusts a focus depending on a distance to the subject. In addition, an optical image stabilization function is applied to prevent the focus from being shaken due to a user's hand shake.

Auto focus and optical image stabilization functions may be performed through the electromagnetic interaction between a magnet and a coil.

However, in the lens driving apparatuses according to the related art, in the arrangement of the magnet and the coil, which perform the auto focus function, the magnet that does not require electrical connection is disposed on a movable part to fix the coil to a fixed part. In this case, there is a problem that the magnet having a large weight compared to the coil is disposed on the movable part to increase in current consumption for performing the auto focus function.

Particularly, in recent, as image sensors become more pixelated, a lens diameter increases, and a weight of the lens also increases to cause an increase in weight.

In addition, in the lens driving apparatuses according to the related art, there is a problem in that a height of the camera device in an optical axis direction increases because a guide structure for OIS-x-axis driving and a guide structure for OIS-y-axis driving are disposed on separate layers.

The auto focus function is performed as the lens moves along an optical axis with respect to the image sensor, and the movement of the lens along the optical axis may be guided by a ball. Here, attractive force between the magnet and a yoke may be used to sandwich the ball between the fixed part and the movable part.

However, in this case, there is a problem that centering force exists in the optical axis direction. Furthermore, the movable part may be tilted due to a contact point of the ball.

In addition, when the ball is used to guide the movement of the movable part for the optical image stabilization function, there is a problem in which the ball is displaced from its original position due to an external impact, etc.
(Patent Document 1) KR 10-2015-0118005 A

### DISCLOSURE OF THE INVENTION

### TECHNICAL PROBLEM

This embodiment provides a lens driving apparatus that reduces power consumption for performing an auto focus function by disposing a coil that is lightweight compared to a magnet on a movable part.

In addition, this embodiment provides a lens driving apparatus that is minimized in height in an optical axis direction by integrating a guide structure for OIS-x-axis driving with a guide structure for OIS-y-axis driving.

This embodiment provides a lens driving apparatus that presses a ball through an elastic member so that there is no centering force in an optical axis direction that occurs when the ball is pressed through a yoke and a magnet.

In addition, this embodiment provides a lens driving apparatus in which rotation and tilt of a movable part are prevented by diagonally disposing a ball guide structure.

This embodiment provides a lens driving apparatus that minimizes detachment or damage of a structure that guides movement of a movable part for an optical image stabilization function.

In addition, this embodiment intends to provide a lens driving apparatus in which a stable coupling surface with a lens is secured by changing a stacking direction during an assembly process.

### TECHNICAL SOLUTION

A lens driving apparatus according to this embodiment may comprise: a base; a housing disposed on the base; a bobbin disposed within the housing; a first ball disposed between the housing and the base; a second ball between the housing and a lower side of the bobbin; an elastic member coupled to an upper side of the bobbin; and a wire configured to connect the elastic member to a lower side of the housing.

The base may comprise a first guide configured to guide the first ball so that the first ball moves.

The housing may comprise a second guide, which is configured to guide the first ball so that the first ball moves, on a side surface thereof.

Each of the first guide and the second guide may comprise a groove.

The housing may comprise: a first housing comprising a lower plate having a metal material; and a second housing coupled to the first housing and having a protrusion configured to guide the second ball.

The lens driving apparatus may further comprise a first board disposed between the first housing and the second housing, wherein the first board may be coupled to a bottom surface of the first housing, and the second housing may be coupled to the first board.

The second housing may be configured to press a portion of the elastic member by being in contact with the second ball.

The elastic member may comprise: an inner part coupled to the bobbin; an outer part coupled to the wire; and a connecting part configured to connect the inner part to the outer part, wherein the inner part of the elastic member may be disposed above the outer part.

The bobbin may comprise a first area coupled to the elastic member, and the wire may comprise a second area coupled to the elastic member, wherein the first area of the bobbin may be disposed above the second area of the wire.

A lens driving apparatus according to this embodiment may comprise: a fixed part; a first movable part disposed on the fixed part; a second movable part disposed within the first movable part; a first driving part configured to move the first movable part in an optical axis direction; a second driving part configured to move the second movable part in a direction perpendicular to the optical axis direction; a first ball disposed between the first movable part and the second movable part; an elastic member coupled to a top surface of the second movable part; and wire disposed in the optical axis direction, wherein an upper end of the wire may be coupled to the elastic member, and a lower end of the wire may be coupled to a bottom surface of the first movable part.

The first movable part may comprise a holder member and a metal member disposed on the holder member, wherein the lower end of the wire may be coupled to the metal member.

The first movable part may comprise a holder member and a pre-load member coupled to the holder member, wherein the pre-load member may comprise a body part coupled to the holder member and a protrusion protruding upward from the body part, wherein the first ball may be disposed on the protrusion of the pre-load member.

The pre-load member may comprise a groove that is defined concavely in a top surface of the protrusion, and the first ball may be disposed in the groove of the protrusion.

The second movable part may comprise a groove that is defined concavely in a bottom surface of the second movable part, and the first ball may be disposed between the groove of the protrusion of the first movable part and the groove of the second movable part.

The fixed part may comprise a base and a cover coupled to the base, and the pre-load member may be disposed between the first movable part and the base in the optical axis direction.

The first driving part may comprise a first magnet disposed on the fixed part and a first coil disposed on the first movable part.

The second driving part may comprise a second magnet and a third magnet, which are disposed on the second movable part, and a second coil and a third coil, which are disposed on the first movable part, wherein the second magnet and the second coil may be configured to move the second movable part in a first direction perpendicular to the optical axis direction, and the third magnet and the third coil may be configured to move the second movable part in a second direction perpendicular to the optical axis direction and the first direction.

The first ball may be configured to guide the second movable part so that the second movable part moves in the first direction and the second direction.

The lens driving apparatus may further comprise: a second ball disposed between the fixed part and the first movable part; and an elastic member configured to press the second ball between the fixed part and the first movable part.

The lens driving apparatus may comprise a first buffer member disposed on a top surface of the base, wherein at least a portion of the first buffer member may be disposed between the pre-load member and the base in the optical axis direction

The lens driving apparatus may comprise a second buffer member disposed on the cover, wherein the cover may comprise an upper plate and a side plate, and the second buffer member may be disposed on the upper plate of the cover so that at least a portion of the second buffer member is disposed between the upper plate of the cover and the first movable part in the optical axis direction.

The lens driving apparatus may comprise a third buffer member disposed on the first movable part, wherein the first movable part may comprise a holder member and a lid coupled to an upper side of the holder member, and the third buffer member may be disposed on a bottom surface of the lid so that at least a portion of the third buffer member is disposed between the lid and the second movable part in the optical axis direction.

A camera device according to this embodiment may comprise: a printed circuit board; an image sensor disposed on the printed circuit board; the lens driving apparatus disposed on the printed circuit board; and a lens coupled to the lens driving apparatus.

An optical device according to this embodiment may comprise: a main body; the camera device disposed on the body; and a display disposed in the main body to output one or more of videos and images captured by the camera device.

### ADVANTAGEOUS EFFECTS

According to this embodiment, the current consumption for performing the auto focus function may be reduced by disposing the coil that is lighter in weight than the magnet on the movable part.

In addition, since the guide structure for the OIS-x-axis driving and the guide structure for the OIS-y-axis driving are integrated with each other, the height of the lens driving apparatus in the optical axis direction may be minimized.

As a result, the height at which the camera device protrudes from the smartphone may be minimized. Alternatively, the camera device may not protrude from the smartphone.

In addition, since the centering force in the optical axis direction, which occurs when the ball is pressed through the yoke and magnet is eliminated, that is, there is no force to return to the centering position, the current consumption for the AF operation may be reduced, even if only slightly, and the accuracy of AF operation may be improved. Here, the centering force may be replaced by one or more of force returning to the initial position, the restoring force, the reversion force, and the return force.

In addition, in this embodiment, the ball guide structure may be disposed diagonally to prevent the rotation and/or the tilt of the movable part from occurring.

In addition, in this embodiment, the detachment or damage to the structure guiding the movement of the movable part for the optical image stabilization function due to the external impact, etc., may be minimized.

In addition, in this embodiment, the stable coupling surface with the lens may be secured by changing the stacking direction during the assembly process. In more detail, in this embodiment, the AF carrier 210 may be stacked at the upper side of the base 110, the OIS carrier 310 may be stacked at the upper side of the AF carrier 210, and the lens may be stacked at the upper side of the AF carrier 210.

### BRIEF DESCRIPTION OF THE DRAWINGS

FIG. 1 is a conceptual view of a lens driving apparatus according to this embodiment.
FIG. 2 is a perspective view of the lens driving apparatus according to this embodiment.
FIG. 3 is a cross-sectional view taken along line A-A of FIG. 2.
FIG. 4 is a cross-sectional view taken along line B**-**B of FIG. 2.
FIG. 5 is an enlarged view of an area F of FIG. 4.
FIG. 6 is a cross-sectional view taken along line C-C of FIG. 2.
FIG. 7 is an enlarged view of an area G of FIG. 6.
FIG. 8 is a cross-sectional view taken along line D-D of FIG. 2.
FIG. 9 is an enlarged view of an area H of FIG. 8.
FIG. 10 is a cross-sectional view taken along line E-E of FIG. 2.
FIG. 11 is a cross-sectional view taken in a direction perpendicular to an optical axis of the lens driving apparatus according to this embodiment.
FIG. 12 is an exploded perspective view of the lens driving apparatus according to this embodiment.
FIG. 13 is an exploded perspective view of the lens driving apparatus when viewed in a direction different from that in FIG. 12 according to this embodiment.
FIG. 14 is a perspective view illustrating a state in which a cover is omitted in the lens driving apparatus according to this embodiment.
FIG. 15 is a perspective view illustrating a configuration related to a fixed part of the lens driving apparatus according to this embodiment.
FIG. 16a is a perspective view illustrating a configuration related to a movable part of the lens driving apparatus according to this embodiment.
FIG. 16b is a perspective view illustrating a coupling structure of an inner board and an outer board of the lens driving apparatus according to this embodiment.
FIG. 16c is a bottom perspective view illustrating a configuration related to the movable part of the lens driving apparatus according to this embodiment.
FIG. 16d is a bottom perspective view illustrating a coupling structure of the inner board and the outer board of the lens driving apparatus according to this embodiment.
FIG. 17 is a perspective view illustrating a state in which a lid is removed in FIG. 16a.
FIG. 18a is a perspective view illustrating a state in which a configuration related to an OIS driving part is removed in FIG. 17.
FIG. 18b is an exploded perspective view illustrating a state in which a wire is separated in FIG. 18a.
FIG. 19 is a perspective view illustrating a configuration related to the OIS driving part of the lens driving apparatus according to this embodiment.
FIG. 20 is a bottom perspective view when viewed in a direction different from that in FIG. 19.
FIG. 21 is a bottom perspective view when viewed in a direction different from that in FIG. 16a.
FIG. 22 is a bottom view illustrating a state in which a pre-load member and the inner board are removed in FIG. 21.
FIG. 23 is a perspective view illustrating a coupling structure of an elastic member, the wire, and a metal member of the lens driving apparatus according to this embodiment.
FIG. 24 is an enlarged view of an area I of FIG. 23.
FIG. 25 is a bottom perspective view illustrating a driving part of the lens driving apparatus according to this embodiment.
FIG. 26 is a cross-sectional perspective view illustrating a coupling structure of the wire and the pre-load member of the lens driving apparatus according to this embodiment.
FIG. 27 is a cross-sectional view illustrating the coupling structure of the wire and the pre-load member of the lens driving apparatus according to this embodiment.
FIG. 28 is a plan view illustrating a state in which the cover of the lens driving apparatus is removed according to this embodiment.
FIG. 29 is a partial enlarged plan view illustrating a state in which the lid is omitted in FIG. 28.
FIG. 30 is a perspective view illustrating a configuration related to a ball of the lens driving apparatus according to this embodiment.
FIG. 31 is a perspective view illustrating a ball accommodation structure of a base of the lens driving apparatus according to this embodiment.
FIG. 32 is a perspective view illustrating a state in which a ball, a plate member, the elastic member, and a reinforcing member are disposed in FIG. 31.
FIG. 33 is a perspective view when viewed in a direction different from that in FIG. 32.
FIG. 34 is a perspective view illustrating a movable part and the ball of the lens driving apparatus according to this embodiment.
FIG. 35 is a perspective view when viewed in a direction different from that in FIG. 34.
(a) of FIG. 36 is a view comparing heights of the ball and a pressing point in a state in which the movable part moves upward, and (b) of FIG. 36 is a view comparing heights of the ball and the pressing point in a state in which the movable part moves downward.
FIG. 37 is a cross-sectional view of a lens driving apparatus according to a modified example.
FIG. 38 is a perspective view illustrating a base and a base buffer member of the lens driving apparatus according to the modified example.
FIG. 39 is a perspective view illustrating a cover and a cover buffer member of the lens driving apparatus according to the modified example.
FIG. 40 is a perspective view illustrating a lid and a lid buffer member of the lens driving apparatus according to the modified example.

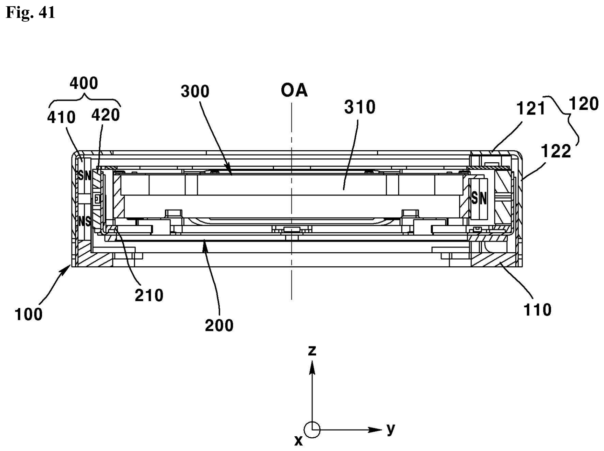

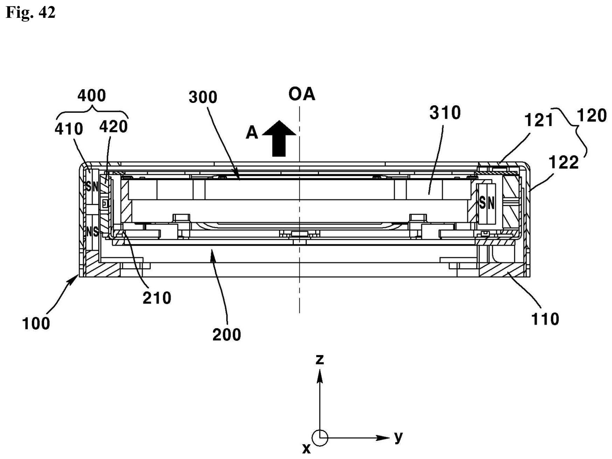

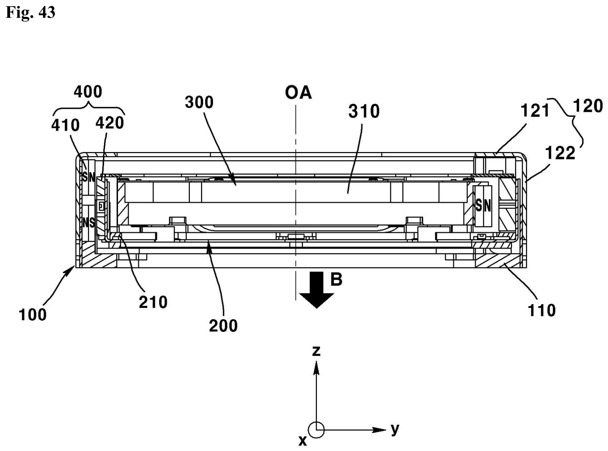

FIGS. 41 to 43 are views for explaining auto focus driving of the lens driving apparatus according to this embodiment. FIG. 41 is a cross-sectional view illustrating a configuration of the movable part in an initial state in which current is not applied to an AF coil. FIG. 42 is a cross-sectional view illustrating a state in which forward current is applied to the AF coil so that the movable part moves upward in an optical axis direction. FIG. 43 is a cross-sectional view illustrating a state in which reverse current is applied to the AF coil so that the movable part moves downward in the optical axis direction.

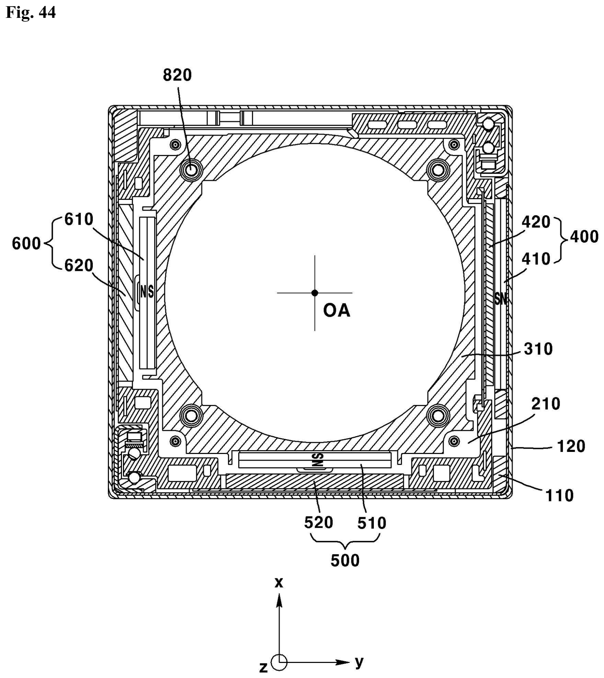

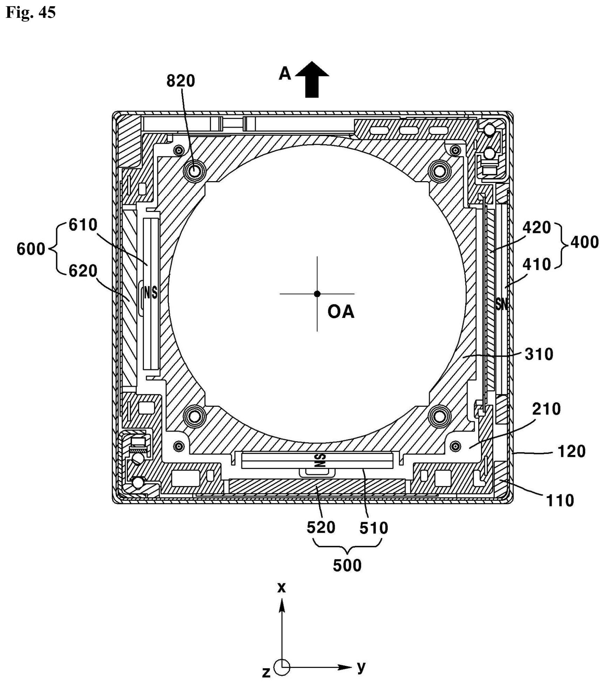

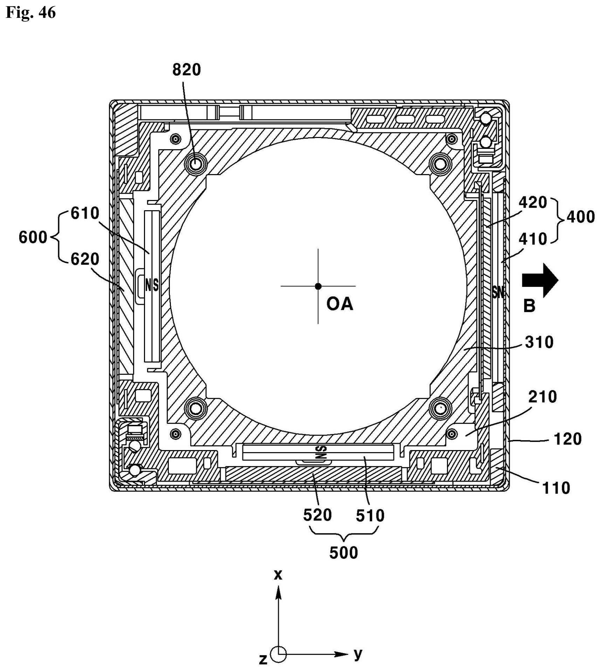

FIGS. 44 to 46 are views for explaining optical image stabilization driving of the lens driving apparatus according to this embodiment. FIG. 44 is a cross-sectional view illustrating an OIS movable part in an initial state in which current is not applied to an OIS-x coil and an OIS-y coil. FIG. 45 is a cross-sectional view illustrating a state in which the OIS movable part moves in an x-axis direction perpendicular to an optical axis by applying current to the OIS-x coil. FIG. 46 is a cross-sectional view illustrating a state in which the OIS movable part moves in a y-axis direction perpendicular to the optical axis and the x-axis by applying current to the OIS-x coil.
FIG. 47 is an exploded perspective view of a camera device according to this embodiment.
FIG. 48 is a perspective view of an optical device according to this embodiment.
FIG. 49 is a perspective view illustrating a modified example of the optical device.

### MODE FOR CARRYING OUT THE INVENTION

Hereinafter, preferred embodiments of the present invention will be described in detail with reference to the accompanying drawings.

However, the technical idea of the present invention is not limited to some of the embodiments described, but may be implemented in various different forms, and one or more of the components in embodiments may be selectively combined or substituted for use even within the scope of the technical idea of the present invention.

In addition, terms (comprising technical and scientific terms) used in the embodiments of the present invention may be interpreted as having a meaning that may be generally understood by a person of ordinary skill in the technical field to which the present invention belongs, unless explicitly and specifically defined and described, and the terms that are commonly used, such as terms defined in a dictionary, may be interpreted in consideration of the contextual meaning of the relevant technology.

In addition, the terms used in the embodiments of the present invention are for the purpose of describing the embodiments and are not intended to limit the present invention.

In this specification, the singular may also comprise the plural unless specifically stated otherwise in the phrase, and when it is described as "A and (or at least one) of B, C", it may comprise one or more of all combinations that may be combined with A, B, C.

In addition, in describing components of the embodiments of the present invention, the terms such as first, second, A, B, (a), (b), etc. may be used. These terms are only intended to distinguish one component from another and are not intended to limit the nature, order, or sequence of the component.

In addition, when a component is described as being 'connected', 'coupled', or 'linked' to another component, it may comprise not only cases where the component is 'connected', 'coupled', or 'linked' directly to the other component, but also cases in which the component is 'connected', 'coupled', or 'linked' by another component between the component and the other component.

In addition, when described as being formed or arranged "above (upper)" or "below (lower)" each component, "above (upper)" or "below (lower)" comprises not only the case where the two components are in direct contact with each other, but also the case in which one or more other components are formed or arranged between the two components. In addition, when expressed as "above (upper)" or "below (lower)", it may comprise the meaning of not only the upward direction but also the downward direction based on one component.

An 'optical axis (see reference symbol OA of FIG. 41) direction' used below is defined as an optical axis direction of a lens and/or an image sensor coupled to a lens driving apparatus.

A 'vertical direction' used below may be a direction parallel to or the same direction as the optical axis. The vertical direction may correspond to a 'z-axis direction'. A 'horizontal direction' used below may refer to a direction perpendicular to the vertical direction. Here, the horizontal direction may be a direction perpendicular to the optical axis. Thus, the horizontal direction may comprise an 'x-axis direction' and a 'y-axis direction'.

Hereinafter, one of the 'x-axis direction' and the 'y-axis direction' may be called a 'first direction', and the other may be called a 'second direction'.

An 'auto focus (AF) function' used below may be defined as a function that automatically focuses on a subject by adjusting a distance from the image sensor by moving the lens along the optical axis according to a distance to the subject so that a clear image of the subject is obtained on the image sensor. In addition, a 'closed-loop auto focus (CLAF) control' is defined as controlling a position of the lens by detecting a distance between the image sensor and the lens to provide feedback in real time, thereby improving accuracy of focus adjustment.

An 'optical image stabilization (OIS) function' used below is defined as a function that moves or tilts the lens in a direction perpendicular to the optical axis to offset hand shake in order to prevent images or videos from being shaken due to the user's hand shake. In addition, the 'closed-loop auto focus (CLAF) control' is defined as detecting a position of the lens with respect to the image sensor and controlling the feedback of the lens position in real time to improve accuracy of the image stabilization.

Hereinafter, one of an "AF movable part 200" and an "OIS movable part 300" may be referred to as a "first movable part", and the other may be referred to as a "second movable part".

Hereinafter, one of an "AF driving part" and an "OIS driving part" may be referred to as a "first driving part", and the other may be referred to as a "second driving part."

Hereinafter, one of the "AF driving part", the "OIS-x driving part", and the "OIS-y driving part" may be referred to as a "first driving part", another may be referred to as a "second driving part", and the other may be referred to as a "third driving part".

Hereinafter, one of an "AF magnet 410", an "OIS-x magnet 510", and an "OIS-y magnet 610" may be referred to as a "first magnet", another may be referred to as a "second magnet", and the other may be referred to as a "third magnet".

Hereinafter, one of an "AF coil 420", an "OIS-x coil 520", and an "OIS-y coil 620" may be referred to as a "first coil", another may be referred to as a "second coil", and the other may be referred to as a "third coil".

Hereinafter, one of an "outer board 710" and an "inner board 720" may be referred to as a "first board", and the other may be referred to as a "second board".

Hereinafter, one of an "AF guide ball 810" and an "OIS guide ball 820" may be referred to as a "first ball", and the other may be referred to as a "second ball".

Hereinafter, one of a "holder member 220" and a "pre-load member 230" may be referred to as a "first member", and the other may be referred to as a "second member". Alternatively, in the following, one of the "holder member 220" and the "pre-load member 230" may be referred to as a "first housing", and the other may be referred to as a "second housing".

Hereinafter, one of an "AF sensor 430", an "OIS-x sensor 530", and an "OIS-y sensor 630" may be referred to as a "first sensor", another may be referred to as a "second sensor", and the other may be referred to as a "third sensor".

Hereinafter, one of an "AF yoke 440", an "OIS-x yoke 540", and an "OIS-y yoke 640" may be referred to as a "first yoke", another may be referred to as a "second yoke", and the other may be referred to as a "third yoke".

Hereinafter, one of a "base buffer member 960", a "cover buffer member 970", and a "lid buffer member 980" may be referred to as a "first buffer member", the other may be referred to as a "second buffer member", and the other may be referred to as a "third buffer member".

Hereinafter, one of an individual ball of an AF guide ball 810 and an individual ball of an OIS guide ball 820 may be referred to as a "first unit ball," another may be referred to as a "second unit ball," further another may be referred to as a "third unit ball," and the other may be referred to as the "fourth unit ball." Furthermore, an "n-th unit ball" may be used to refer to an individual ball, such as a "fifth unit ball", a "sixth unit ball", etc.

Hereinafter, one of a "pillar portion 111" and an "outer wall portion 112" may be referred to as a "first portion", and the other may be referred to as a "second portion".

Hereinafter, one of an "inner groove 111-1" and an "outer groove 112-1" may be referred to as a "first groove", and the other may be referred to as a "second groove".

Hereinafter, one of an "inner groove 224-1" and an "outer groove 224-2" may be referred to as a "first groove" and the other may be referred to as a "second groove".

Hereinafter, one of an "inner ball 811" and an "outer ball 812" may be referred to as a "first unit ball", and the other may be referred to as a "second unit ball".

Hereinafter, one of the "uppermost inner ball 811-1" and the "uppermost outer ball 812-1" may be referred to as the "first uppermost ball", and the other may be referred to as the "second uppermost ball".

Hereinafter, one of the "lowermost inner ball 811-2" and the "lowermost outer ball 812-2" may be referred to as the "first lowermost ball", and the other may be referred to as the "second lowermost ball".

Hereinafter, one of an "upper bent part 921", a "lower bent part 922", and a "connecting bent part 923" may be referred to as a "first bent part", another may be referred to as a "second bent part", and the other may be referred to as a "third bent part".

Hereinafter, an "AF carrier 210" may be referred to as a "housing." Hereinafter, an "OIS carrier 310" may be referred to as a "bobbin".

Hereinafter, a configuration of the lens driving apparatus according to this embodiment is described with reference to the drawings.

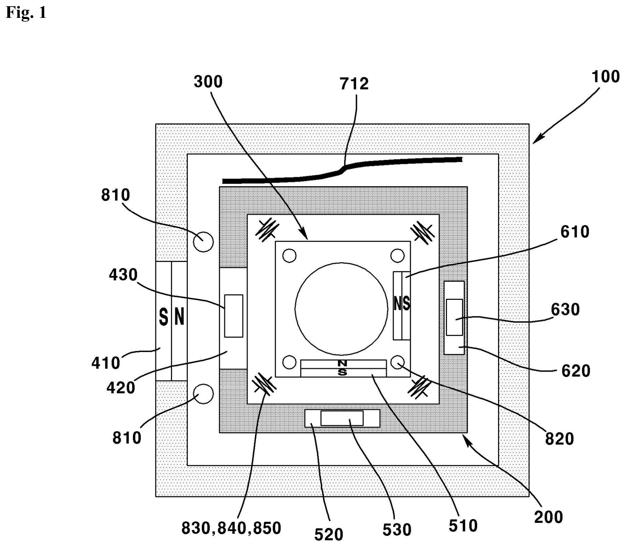

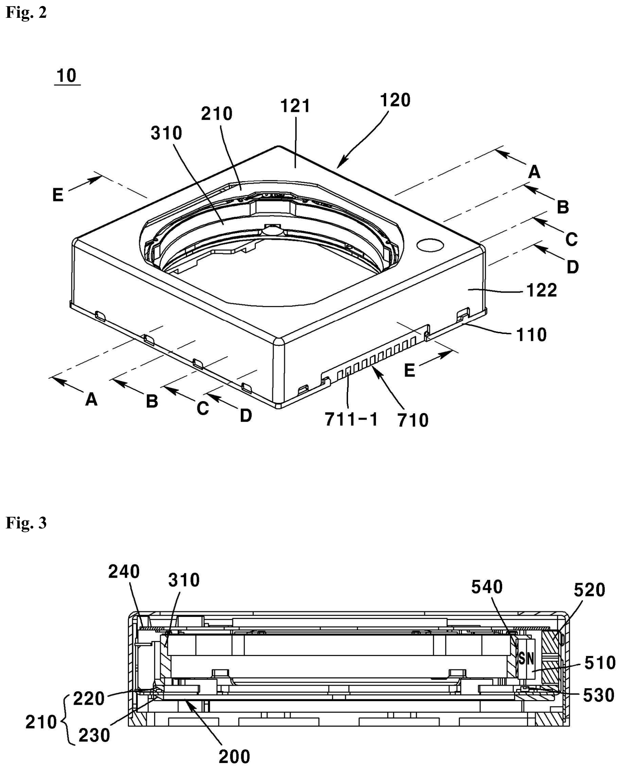

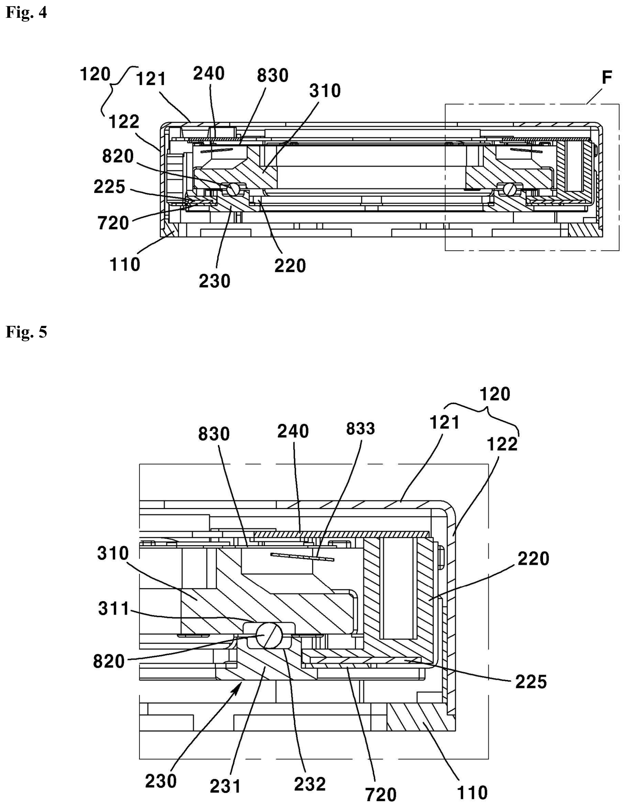

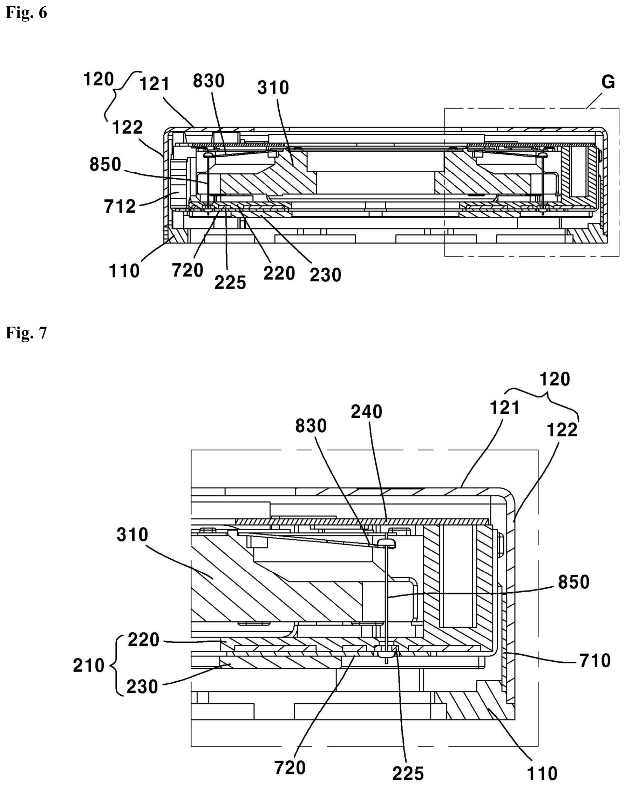

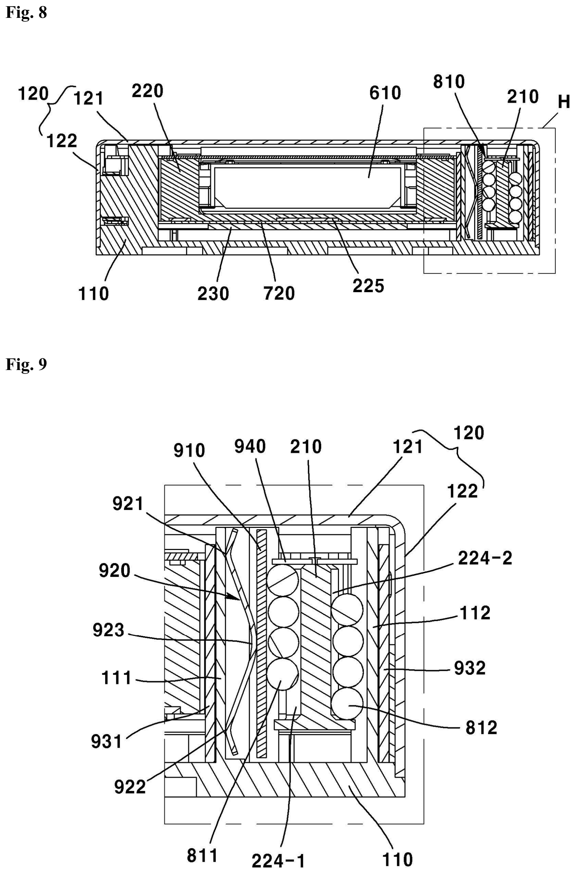

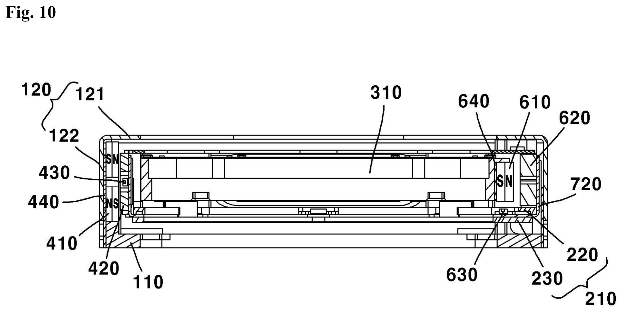

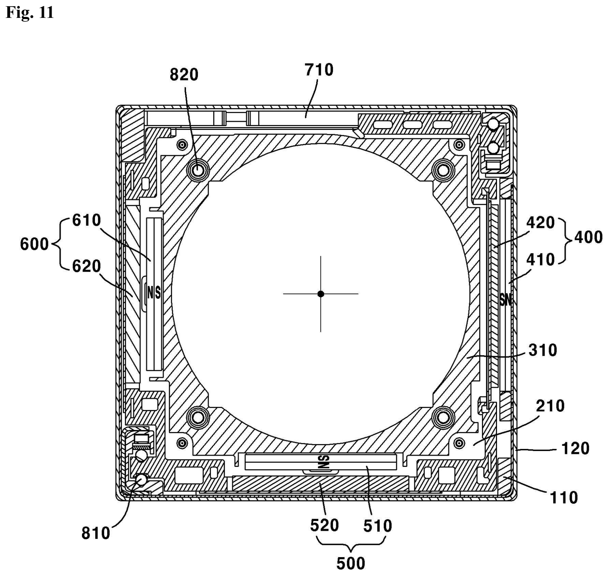

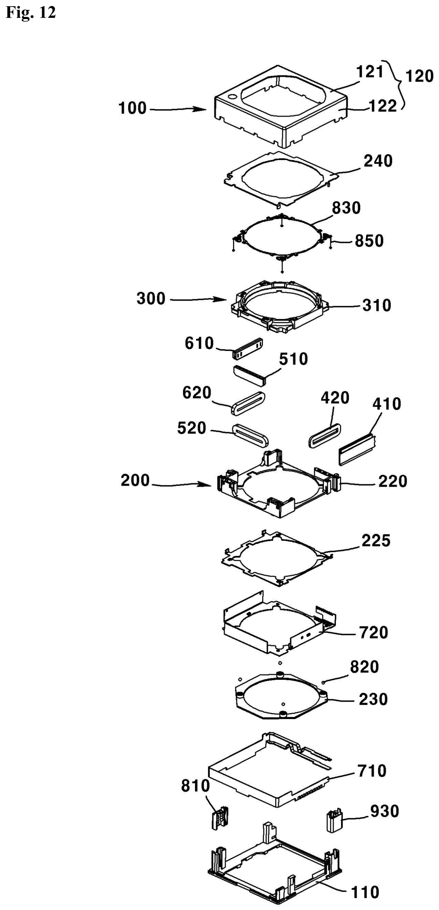

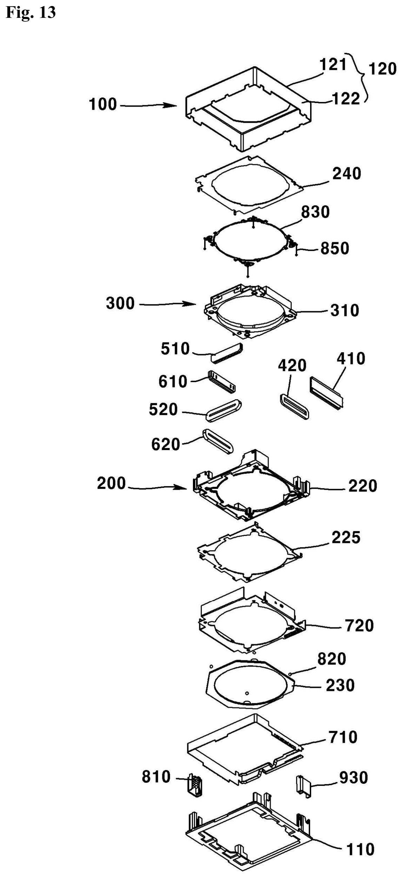

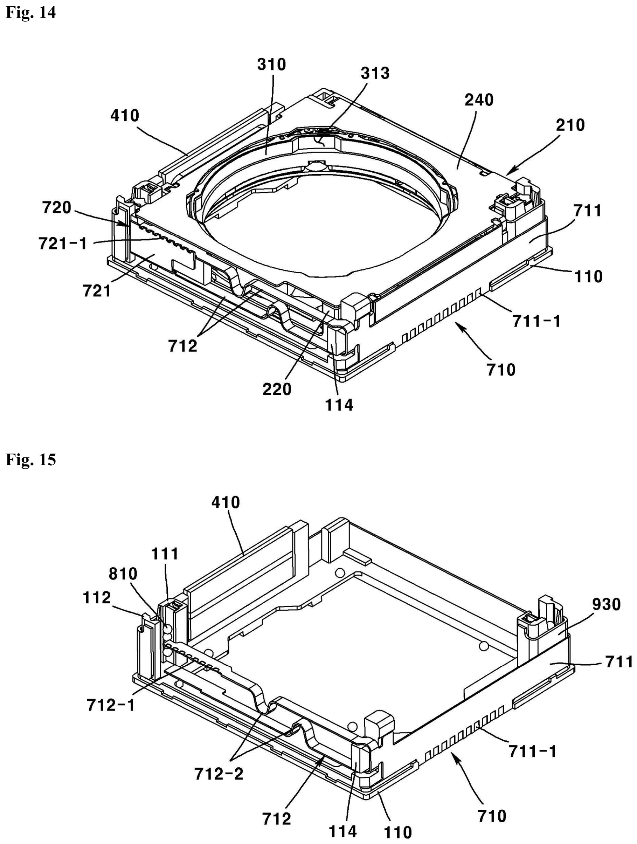

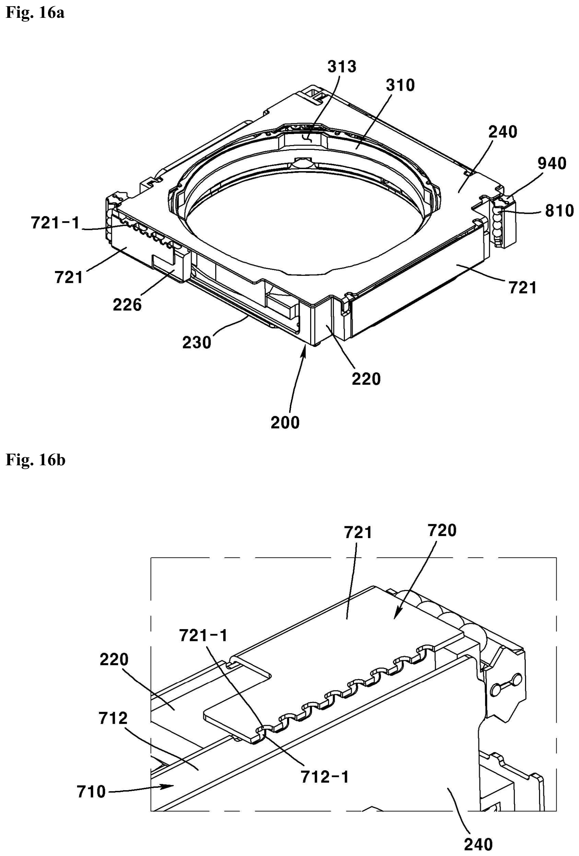

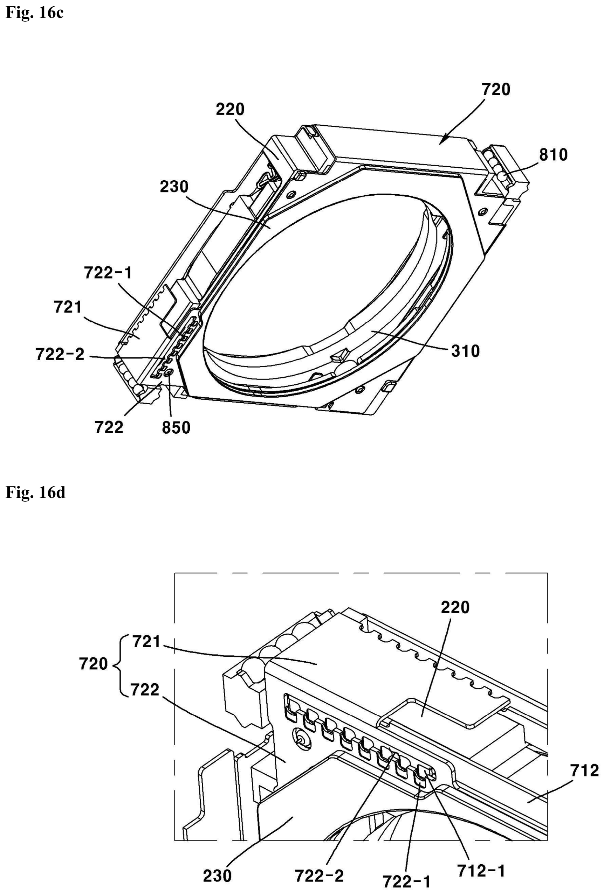

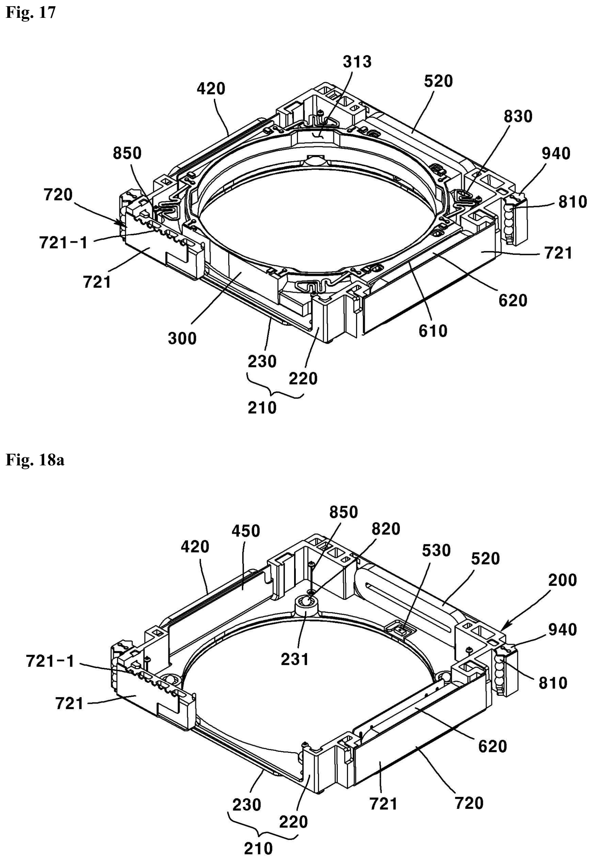

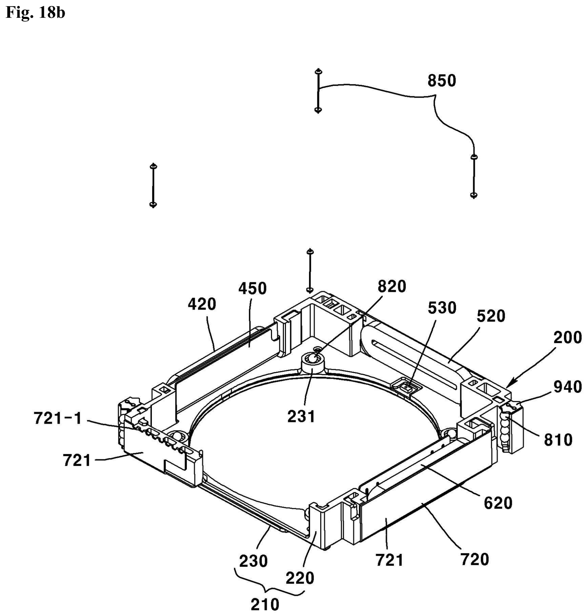

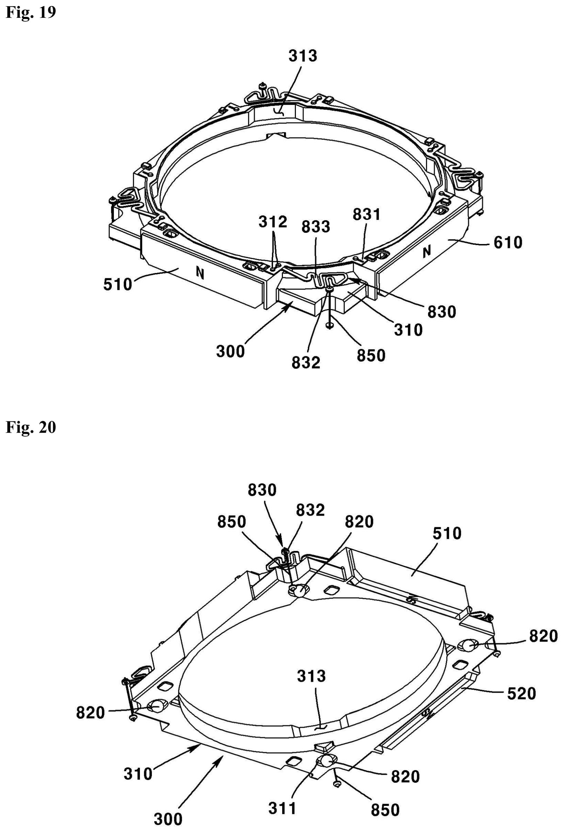

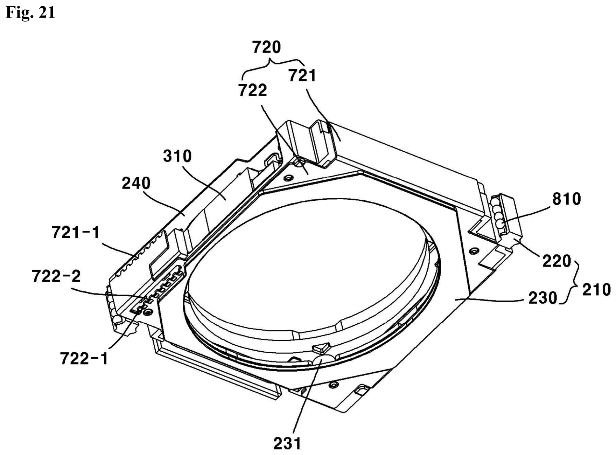

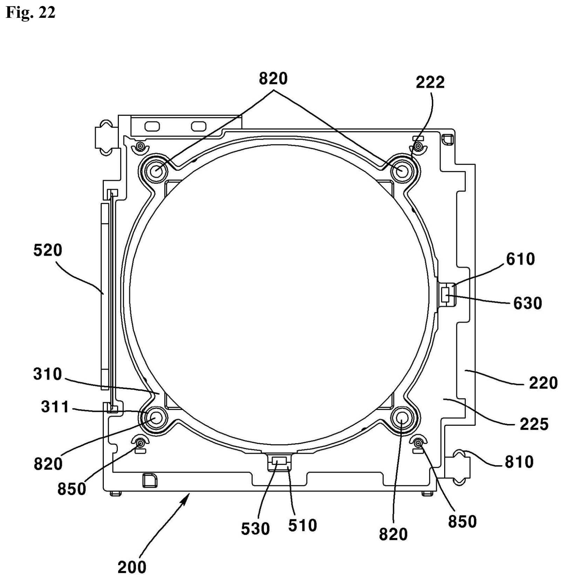

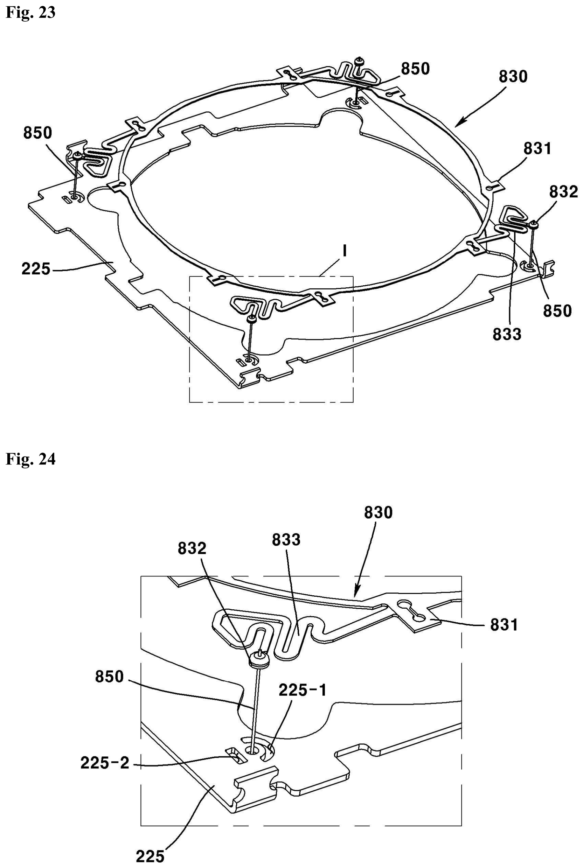

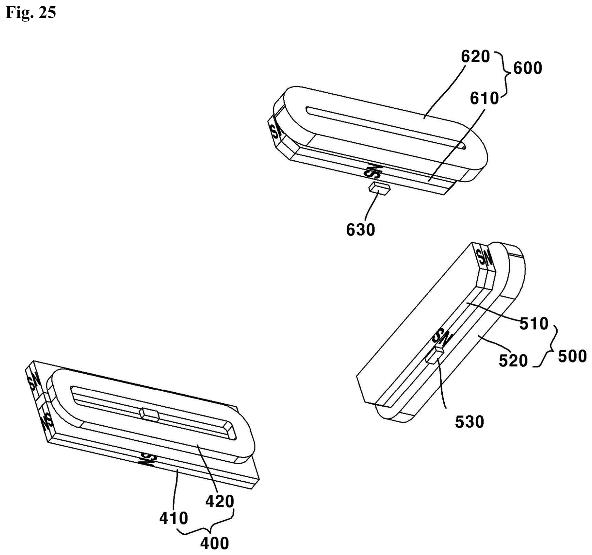

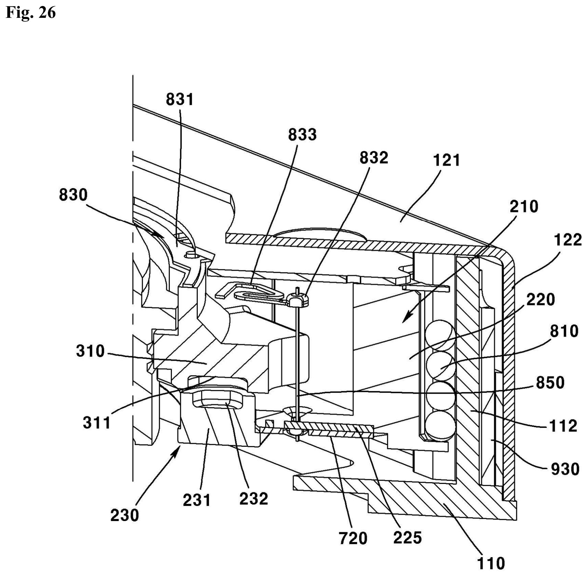

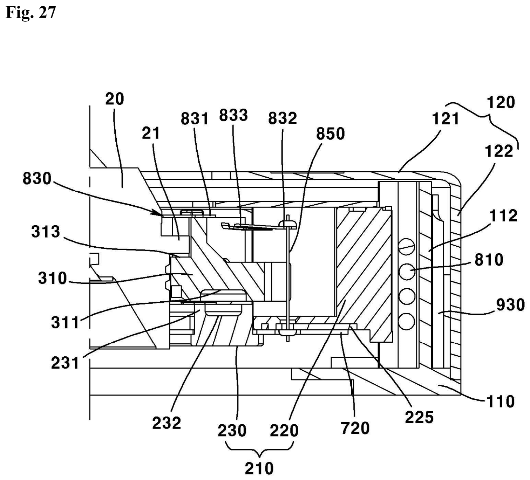

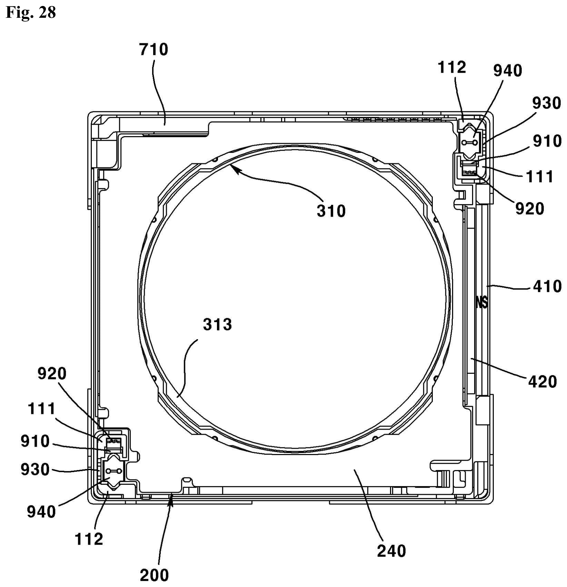

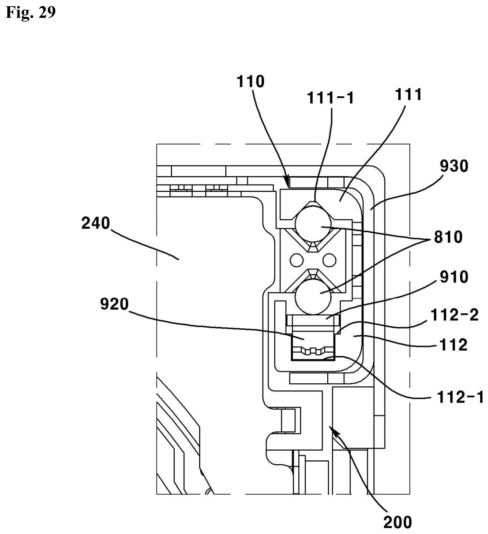

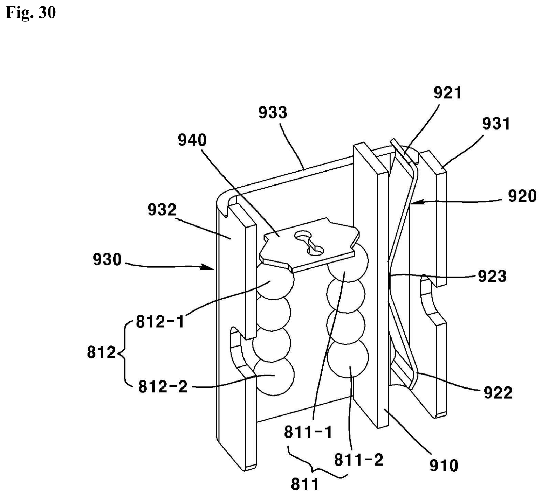

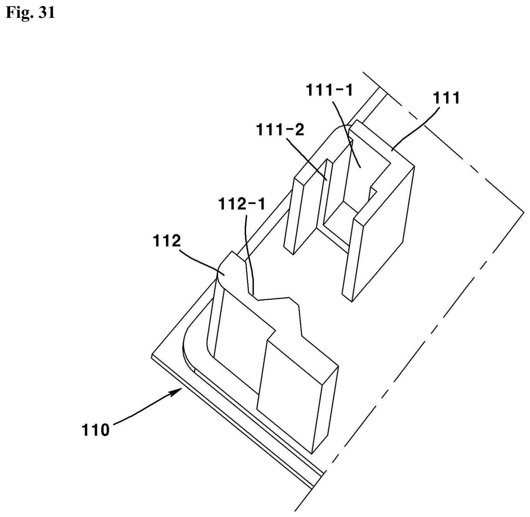

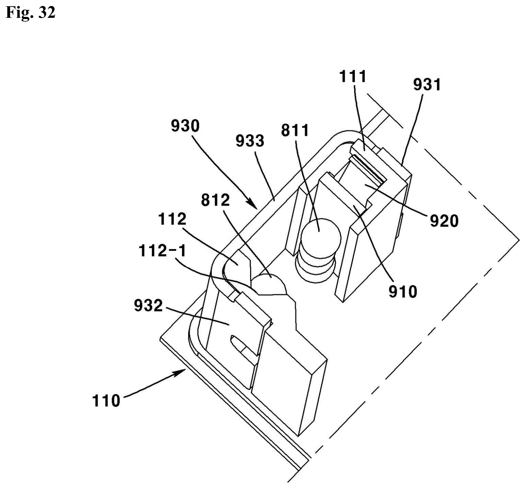

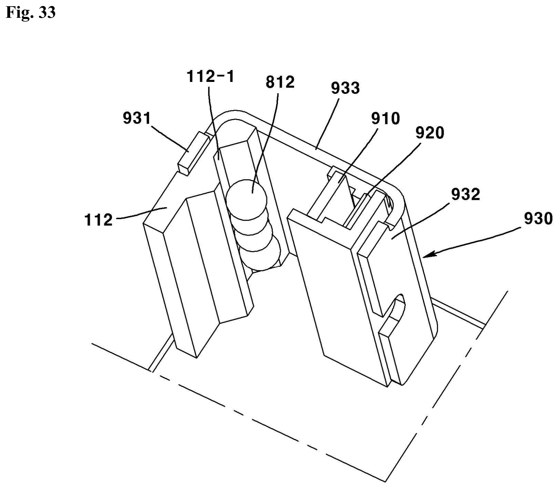

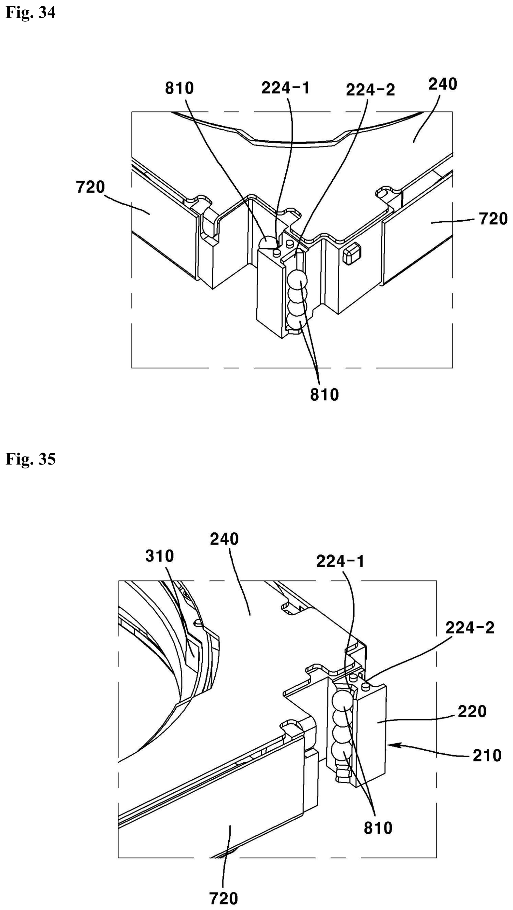

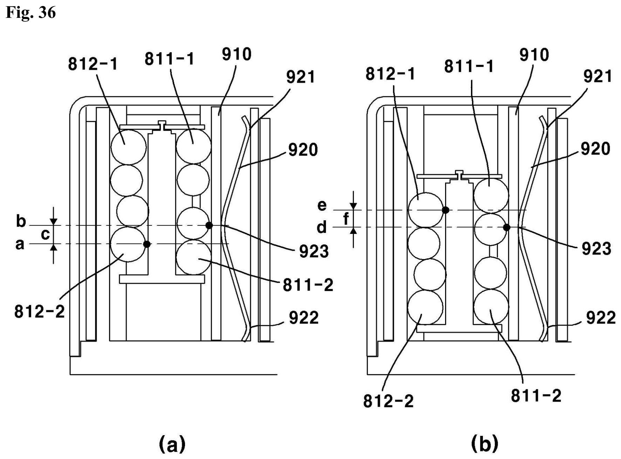

FIG. 1 is a conceptual view of a lens driving apparatus according to this embodiment. FIG. 2 is a perspective view of the lens driving apparatus according to this embodiment. FIG. 3 is a cross-sectional view taken along line A-A of FIG. 2. FIG. 4 is a cross-sectional view taken along line B-B of FIG. 2. FIG. 5 is an enlarged view of an area F of FIG. 4. FIG. 6 is a cross-sectional view taken along line C-C of FIG. 2. FIG. 7 is an enlarged view of an area G of FIG. 6. FIG. 8 is a cross-sectional view taken along line D-D of FIG. 2. FIG. 9 is an enlarged view of an area H of FIG. 8. FIG. 10 is a cross-sectional view taken along line E-E of FIG. 2. FIG. 11 is a cross-sectional view taken in a direction perpendicular to an optical axis of the lens driving apparatus according to this embodiment. FIG. 12 is an exploded perspective view of the lens driving apparatus according to this embodiment. FIG. 13 is an exploded perspective view of the lens driving apparatus when viewed in a direction different from that in FIG. 12 according to this embodiment. FIG. 14 is a perspective view illustrating a state in which a cover is omitted in the lens driving apparatus according to this embodiment. FIG. 15 is a perspective view illustrating a configuration related to a fixed part of the lens driving apparatus according to this embodiment. FIG. 16a is a perspective view illustrating a configuration related to a movable part of the lens driving apparatus according to this embodiment. FIG. 16b is a perspective view illustrating a coupling structure of an inner board and an outer board of the lens driving apparatus according to this embodiment. FIG. 16c is a bottom perspective view illustrating a configuration related to the movable part of the lens driving apparatus according to this embodiment. FIG. 16d is a bottom perspective view illustrating a coupling structure of the inner board and the outer board of the lens driving apparatus according to this embodiment. FIG. 17 is a perspective view illustrating a state in which a lid is removed in FIG. 16. FIG. 18a is a perspective view illustrating a state in which a configuration related to an OIS driving part is removed in FIG. 17. FIG. 18b is an exploded perspective view illustrating a state in which a wire is separated in FIG. 18a. FIG. 19 is a perspective view illustrating a configuration related to the OIS driving part of the lens driving apparatus according to this embodiment. FIG. 20 is a bottom perspective view when viewed in a direction different from that in FIG. 19. FIG. 21 is a bottom perspective view when viewed in a direction different from that in FIG. 16a. FIG. 22 is a bottom view illustrating a state in which a pre-load member and the inner board are removed in FIG. 21. FIG. 23 is a perspective view illustrating a coupling structure of an elastic member, the wire, and a metal member of the lens driving apparatus according to this embodiment. FIG. 24 is an enlarged view of an area I of FIG. 23. FIG. 25 is a bottom perspective view illustrating a driving part of the lens driving apparatus according to this embodiment. FIG. 26 is a cross-sectional perspective view illustrating a coupling structure of the wire and the pre-load member of the lens driving apparatus according to this embodiment. FIG. 27 is a cross-sectional view illustrating the coupling structure of the wire and the pre-load member of the lens driving apparatus according to this embodiment. FIG. 28 is a plan view illustrating a state in which the cover of the lens driving apparatus is removed according to this embodiment. FIG. 29 is a partial enlarged plan view illustrating a state in which the lid is omitted in FIG. 28. FIG. 30 is a perspective view illustrating a configuration related to a ball of the lens driving apparatus according to this embodiment. FIG. 31 is a perspective view illustrating a ball accommodation structure of a base of the lens driving apparatus according to this embodiment. FIG. 32 is a perspective view illustrating a state in which a ball, a plate member, the elastic member, and a reinforcing member are disposed in FIG. 31. FIG. 33 is a perspective view when viewed in a direction different from that in FIG. 32. FIG. 34 is a perspective view illustrating a movable part and the ball of the lens driving apparatus according to this embodiment. FIG. 35 is a perspective view when viewed in a direction different from that in FIG. 34. (a) of FIG. 36 is a view comparing heights of the ball and a pressing point in a state in which the movable part moves upward, and (b) of FIG. 36 is a view comparing heights of the ball and the pressing point in a state in which the movable part moves downward.

A lens driving apparatus 10 may be a voice coil motor (VCM). The lens driving apparatus 10 may be a lens driving motor. The lens driving apparatus 10 may be a lens driving actuator. The lens driving apparatus 10 may comprise an AF module. The lens driving apparatus 10 may comprise an OIS module.

The lens driving apparatus 10 may comprise a fixed part 100. The fixed part 100 may be a portion that is relatively fixed when a movable part moves. The movable part may move relative to the fixed part 100.

The lens driving apparatus 10 may comprise a base 110. The fixed part 100 may comprise the base 110. The base 110 may be disposed below an AF carrier 210. The base 110 may be disposed below an OIS carrier 310. The base 110 may be coupled to a cover 120. An AF carrier 210 and an OIS carrier 310 may be disposed on the base 110. The AF carrier 210 and the OIS carrier 310 may be disposed on a lower plate of the base 110. The AF carrier 210 and the OIS carrier 310 may be disposed within the base 110. The AF carrier 210 and the OIS carrier 310 may be disposed within a sidewall of the base 110.

The base 110 may comprise the lower plate. The lower plate of the base 110 may support a bottom surface of an AF movable part 200. The lower plate of the base 110 may support a bottom surface of the AF carrier 210.

The base 110 may comprise a pillar portion 111. The pillar portion 111 may extend from a top surface of the lower plate. The pillar portion 111 may be disposed inside an outer wall portion 112.

The base 110 may comprise a first guide that guides an AF guide ball 810 to move. The first guide may comprise an inner groove 111-1 of the base 110. The first guide may comprise an outer groove 112-1 of the base 110.

The base 110 may comprise the inner groove 111-1. The pillar portion 111 may comprise the inner groove 111-1. The inner groove 111-1 may be defined in the pillar portion 111. The inner groove 111-1 may be an 'AF guide ball accommodation groove'. The AF guide ball 810 may be disposed in the inner groove 111-1. The inner ball 811 may be disposed in the inner groove 111-1. The inner groove 111-1 may be in direct contact with the AF guide ball 810. The inner groove 111-1 may be disposed in an optical axis direction. The inner groove 111-1 may comprise a plurality of grooves. The inner groove 111-1 may comprise two grooves. The two grooves may be disposed parallel to each other. The two grooves may be disposed diagonally relative to the optical axis.

The base 110 may comprise a stepped protrusion 111-2. The stepped protrusion 111-2 may be disposed on the pillar portion 111. A plate member 910 may be disposed on the stepped protrusion 111-2.

The base 110 may comprise the outer wall portion 112. The outer wall portion 112 may be a 'side portion'. The outer wall portion 112 may be a 'side plate'. The outer wall portion 112 may be a 'sidewall'. The outer wall portion 112 of the base 110 may extend from the top surface of the lower plate.

The base 110 may comprise an outer groove 112-1. The outer wall portion 112 may comprise the outer groove 112-1. The outer groove 112-1 may be defined to face the inner groove 111-1. The outer groove 112-1 may be disposed to face the inner groove 111-1. The outer groove 112-1 may be an 'AF guide ball accommodation groove.' An AF guide ball 810 may be disposed in the outer groove 112-1. An outer ball 812 may be disposed in the outer groove 112-1. The outer groove 112-1 may be in direct contact with the AF guide ball 810. The outer groove 112-1 may be disposed in the optical axis direction. The outer groove 112-1 may comprise a plurality of grooves. The outer groove 112-1 may comprise two grooves. The two grooves may be disposed parallel to each other. The two grooves may be disposed diagonally relative to the optical axis. The outer groove 112-1 may be disposed to be opposite to the inner groove 111-1. The outer groove 112-1 may be provided in a shape corresponding to that of the inner groove 111-1. The outer groove 112-1 and the inner groove 111-1 may have the same length in the optical axis direction.

The base 110 may comprise a protrusion 114. The protrusion 114 may protrude outward. A connecting part 712 of an outer board 710 may be disposed on each of upper and lower sides of the protrusion 114. A groove may be defined in the protrusion 114 so as not to interfere with the connecting part 712 of the outer board 710 even when moving.

The base 110 may comprise a stepped portion. The stepped portion may be disposed on a lower end of an outer surface of the base 110. The stepped portion may protrude from the outer surface of the base 110. A side plate 122 of the cover 120 may be disposed on the stepped portion of the base 110.

The lens driving apparatus 10 may comprise the cover 120. The fixed part 100 may comprise the cover 120. The cover 120 may be disposed on the base 110. The cover 120 may be disposed on the base 110. The cover 120 may be coupled to the base 110. The cover 120 may be fixed to the base 110. The cover 120 may accommodate the AF carrier 210 therein. The cover 120 may accommodate the OIS carrier 310 therein. The cover 120 may be a shield member. The cover 120 may be a shield may.

The cover 120 may comprise a upper plate 121. An upper plate 121 may be disposed on the movable part. Upward movement of the movable part may be limited by the movable part that is in contact with the upper plate 121. The upper plate 121 may comprise a hole through which light passes.

The cover 120 may comprise the side plate 122. The side plate 122 may extend from the upper plate 121. The side plate 122 may be disposed on the base 110. The side plate 122 may be disposed on a stepped portion that protrudes from a lower end of the outer surface of the base 110. The side plate 122 may comprise a plurality of side plates. The side plate 122 may comprise four side plates. The side plate 122 may comprise a first side plate and a second side plate, which are disposed opposite each other, and a third side plate and a fourth side plate, which are disposed opposite each other.

The lens driving apparatus 10 may comprise the movable part. The movable part may be disposed on the fixed part 100. The movable part may be disposed within the fixed part 100. The movable part may be disposed on the fixed part 100. The movable part may be movably disposed on the fixed part 100. The movable part may move relative to the fixed part 100 by a driving part. The movable part may move during AF driving. The movable part may move during OIS driving. A lens may be coupled to the movable part.

The lens driving apparatus 10 may comprise an AF movable part 200. The AF movable part 200 may be disposed on the fixed part 100. The AF movable part 200 may be disposed within the fixed part 100. The AF movable part 200 may be disposed on the fixed part 100. The AF movable part 200 may be disposed between the fixed part 100 and the OIS movable part 300. The AF movable part 200 may be movably disposed on the fixed part 100. The AF movable part 200 may move in the optical axis direction with respect to the fixed part 100 by an AF driving part 400. The AF movable part 200 may move during the AF driving.

In a modified example, the AF movable part 200 and the AF driving part 400 may be omitted. That is, the OIS movable part 300 may be disposed on the fixed part 100. Alternatively, the OIS movable part 300 may be disposed on the fixed part 100, and the AF movable part 200 may be disposed within the OIS movable part 300.

The lens driving apparatus 10 may comprise an AF carrier 210. The AF movable part 200 may comprise the AF carrier 210. The AF carrier 210 may be an 'AF holder'. The AF carrier 210 may be a 'housing'. The AF carrier 210 may be disposed within the base 110. The AF carrier 210 may be disposed on the base 110. The AF carrier 210 may be disposed within the cover 120. The AF carrier 210 may be disposed between the base 110 and the OIS carrier 310. The AF carrier 210 may be disposed to be movable in an optical axis direction.

The AF carrier 210 may comprise a frame, a first upper plate, and a second upper plate. Here, the frame may be a body part. The frame may be a holder member 220. The first upper plate may be a metal member 225. The second plate may be a pre-load member 230. The AF carrier 210 may be a housing. The housing may comprise a first housing and a second housing. Here, the first housing may comprise the holder member 220, and the second housing may comprise the pre-load member 230. The OIS carrier 310 may be a bobbin. An OIS guide ball 820 may be disposed between the housing and the bobbin. An AF guide ball 810 may be disposed between a side surface of the housing and the cover 120. The AF guide ball 810 may be disposed between the side surface of the housing and the base or a pillar of the base.

The lens driving apparatus 10 may comprise the holder member 220. The AF carrier 210 may comprise the holder member 220. The holder member 220 may be provided separately from the pre-load member 230. A wire 850 may be coupled to the holder member 220.

The AF carrier 210 may comprise a lower plate. The lower plate may be disposed below the OIS carrier 310. The lower plate may be disposed between the OIS carrier 310 and the base 110.

The AF carrier 210 may comprise a groove 222. The groove 222 may be a 'pre-load member through-hole'. The holder member 220 may comprise the groove 222. The lower plate of the holder member 220 may comprise the groove 222. The groove 222 may be defined in the lower plate of the holder member 220. The groove 222 may be opened inward. The pre-load member 230 may be inserted into the groove 222. A protrusion 231 of the pre-load member 230 may be inserted into the groove 222. The groove 222 may be defined as a hole. The groove 222 may be replaced with a hole. That is, as a modified example, the AF carrier 210 may comprise the groove 222 into which the protrusion 231 of the pre-load member 230 is inserted.

The AF carrier 210 may comprise a sidewall. The sidewall may extend downward from the upper plate. An inner board 720 may be disposed on the sidewall. An AF coil 420 may be disposed on the sidewall. An OIS-x coil 520 may be disposed on the sidewall. An OIS-y coil 620 may be disposed on the sidewall. The sidewall may comprise a groove to avoid the coil. The sidewall may comprise a plurality of sidewalls. The sidewall may comprise four sidewalls. The sidewalls may comprise a first sidewall and a second sidewall, which are disposed to be opposite to each other, and a third sidewall and a fourth sidewall, which are disposed to be opposite to each other.

The AF carrier 210 may comprise a second guide that guides the AF guide ball 810 to move. The second guide may comprise an inner groove 224-1 of the AF carrier 210. The second guide may comprise an outer groove 224-2 of the AF carrier 210.

The AF carrier 210 may comprise the inner groove 224-1. The holder member 220 may comprise the inner groove 224-1. The inner groove 224-1 may be an 'AF guide ball accommodation groove'. The AF guide ball 810 may be disposed in the inner groove 224-1. The inner ball 811 may be disposed in the inner groove 224-1. The inner groove 224-1 may be in direct contact with the AF guide ball 810. The inner groove 224-1 may be disposed in an optical axis direction. The inner groove 224-1 may guide the AF guide ball 810 to move in the optical axis direction. The inner groove 224-1 may comprise a plurality of grooves. The inner groove 224-1 may comprise two grooves. The two grooves may be disposed parallel to each other. The two grooves may be disposed diagonally relative to the optical axis.

The AF carrier 210 may comprise an outer groove 224-2. The holder member 220 may comprise the outer groove 224-2. The outer groove 224-2 may be an 'AF guide ball accommodation groove.' An AF guide ball 810 may be disposed in the outer groove 224-2. An outer ball 812 may be disposed in the outer groove 224-2. The outer groove 224-2 may be in direct contact with the AF guide ball 810. The outer groove 224-2 may be disposed in the optical axis direction. The outer groove 224-2 may guide the AF guide ball 810 to move in the optical axis direction. The outer groove 224-2 may comprise a plurality of grooves. The outer groove 224-2 may comprise two grooves. The two grooves may be disposed parallel to each other. The two grooves may be disposed diagonally relative to the optical axis. The outer groove 224-2 may be disposed to be opposite to the inner groove 224-1. The outer groove 224-2 may have a shape corresponding to that of the inner groove 224-1. The outer groove 224-2 and the inner groove 224-1 may have the same length in the optical axis direction.

The AF carrier 210 may comprise a metal member 225. The holder member 220 may comprise the metal member 225. The holder member 220 may comprise a lower plate having the metal member 225. The metal member 225 may be disposed on the holder member 220. The metal member 225 may be insert-injected into the holder member 220. At least a portion of the metal member 225 may be disposed on a top surface of the holder member 220. The metal member 225 may be disposed to reinforce strength of the holder member 220.

The metal member 225 may comprise a hole. A wire 850 may be disposed in the hole. The wire 850 may pass through the hole of the metal member 225.

The metal member 225 may comprise a first hole 225-1. The first hole 225-1 may be disposed adjacent to the wire 850. The first hole 225-1 may be disposed adjacent to the hole through which the wire 850 passes. The first hole 225-1 may be disposed adjacent to a conductive member that couples the wire 850 to the metal member 225. The conductive member that couples the wire 850 to the metal member 225 may be introduced into the first hole 225-1. Solder that couples the wire 850 to the metal member 225 may be introduced into the first hole 225-1. The first hole 225-1 may be provided to have a curvature. The first hole 225-1 may have a U shape when viewed from below. The first hole 225-1 may comprise a curved shape when viewed from below.

The metal member 225 may comprise a second hole 225-2. The second hole 225-2 may be disposed adjacent to the wire 850. The second hole 225-2 may be disposed adjacent to the hole through which the wire 850 passes. The second hole 225-2 may be disposed adjacent to a conductive member that couples the wire 850 to the metal member 225. The conductive member that couples the wire 850 to the metal member 225 may be introduced into the second hole 225-2. The second hole 225-2 may be disposed at an opposite side of the first hole 225-1 with respect to the wire 850. The second hole 225-2 may be disposed at an opposite side of the first hole 225-1 with respect to the hole of the metal member 225, in which the wire 850 is disposed. Solder that couples the wire 850 to the metal member 225 may be introduced into the second hole 225-2. The second hole 225-2 may extend straightly.

The AF carrier 210 may comprise a protrusion 226. The holder member 220 may comprise the protrusion 226. The protrusion 226 may be disposed on an outer surface of the AF carrier 210. The protrusion 226 may protrude outward from the AF carrier 210. A connecting part 712 may be disposed on each of top and bottom surfaces of the protrusion 226.

The lens driving apparatus 10 may comprise the pre-load member 230. The AF carrier 210 may comprise the pre-load member 230. The pre-load member 230 may be coupled to a top surface of the holder member 220. The pre-load member 230 may be coupled to the holder member 220. The pre-load member 230 may be inserted from an upper side and then be coupled to the holder member 220. The pre-load member 230 may press the OIS guide ball 820. The pre-load member 230 may be in contact with the OIS guide ball 820. The pre-load member 230 may be in direct contact with the OIS guide ball 820. The pre-load member 230 may be coupled to the holder member 220 to press the OIS guide ball 820. The pre-load member 230 may press a portion of an elastic member 830 by being in contact with the OIS guide ball 820.

The pre-load member 230 may be disposed between the AF movable part 200 and the base 110 in the optical axis direction. The pre-load member 230 may be disposed between the AF movable part 200 and the base 110. The pre-load member 230 may be disposed between the AF carrier 210 and the base 110.

The AF carrier 210 may comprise a protrusion 231. The pre-load member 230 may comprise the protrusion 231. The protrusion 231 may be a 'protrusion'. The pre-load member 230 may have the protrusion 231 that guides the OIS guide ball 820. The protrusion 231 may be coupled to the groove 222 of the holder member 220. The protrusion 231 of the pre-load member 230 may be inserted from a lower side into the groove 222 of the holder member 220. The protrusion 231 of the pre-load member 230 may be disposed in the groove 222 of the holder member 220. At least a portion of the protrusion 231 of the pre-load member 230 may be disposed in the groove 222 of the holder member 220. The protrusion 231 may comprise a plurality of protrusions. The protrusion 231 may comprise four protrusions.

The AF carrier 210 may comprise a groove 232. The pre-load member 230 may comprise the groove 232. The groove 232 may be an 'OIS guide ball accommodation groove'. The groove 232 may be defined in the protrusion 231. The groove 232 may be defined in a top surface of the protrusion 231. The groove 232 may be defined at an end of the protrusion 231. The groove 232 may be defined concavely in the top surface of the protrusion 231. An OIS guide ball 820 may be disposed in the groove 232. The OIS guide ball 820 may be in contact with the groove 232.

The pre-load member 230 may comprise a body part 233. The body part 233 may be coupled to the holder member 220. The body part 233 may be disposed on a bottom surface of the holder member 220. The protrusion 231 may protrude upward from the body part 233.

The lens driving apparatus 10 may comprise a lid 240. The AF movable part 200 may comprise the lid 240. The lid 240 may be coupled to the AF carrier 210. The lid 240 may be coupled to a top surface of the AF carrier 210. The lid 240 may be coupled to the AF carrier 210 from an upper side. The lid 240 may be coupled to an upper side of the holder member 220. The lid 240 may comprise a hook. The hook of the lid 240 may be coupled to the AF carrier 210. The hook of the lid 240 may protrude downward and may be coupled to a side surface of the AF carrier 210.

The lens driving apparatus 10 may comprise an OIS movable part 300. The OIS movable part 300 may be disposed at the fixed part 100. The OIS movable part 300 may be disposed within the fixed part 100. The OIS movable part 300 may be disposed on the fixed part 100. The OIS movable part 300 may be disposed within the AF movable part 200. The OIS movable part 300 may be disposed movably. The OIS movable part 300 may move in a direction perpendicular to the optical axis with respect to the fixed part 100 and the AF movable part 200 by the OIS driving part. The OIS movable part 300 may move in the x-axis direction by an OIS-x driving part 500. The OIS movable part 300 may move in the y-axis direction by an OIS-y driving part 600. The OIS movable part 300 may move during the OIS driving.

The lens driving apparatus 10 may comprise the OIS carrier 310. The OIS movable part 300 may comprise the OIS carrier 310. The OIS carrier 310 may be an 'OIS holder'. The OIS carrier 310 may be a 'bobbin'. The OIS carrier 310 may be disposed within the AF carrier 210. The OIS carrier 310 may be disposed within the base 110. The OIS carrier 310 may be disposed on the base 110. The OIS carrier 310 may be disposed within the cover 120. The OIS carrier 310 may be disposed to be movable in a direction perpendicular to the optical axis.

The OIS carrier 310 may comprise an outer surface. The OIS carrier 310 may comprise a plurality of side surfaces. The OIS carrier 310 may comprise a first side surface and a second side surface, which are disposed to be opposite to each other, and a third side surface and a fourth side surface, which are disposed to be opposite to each other. The AF coil 420 may be disposed between the first side surface of the OIS carrier 310 and an AF magnet 410. The OIS-x magnet 510 may be disposed on the third side surface of the OIS carrier 310. The OIS-y magnet 610 may be disposed on the second side surface of the OIS carrier 310.

The OIS carrier 310 may comprise a groove. The groove may be an 'elastic member interference prevention groove'. The groove may be defined in the top surface of the OIS carrier 310. The groove may be defined concavely in the top surface of the OIS carrier 310. The groove may be disposed at a position corresponding to the elastic member 830 to prevent an interference between the OIS carrier 310 and the elastic member 830.

The OIS carrier 310 may comprise a groove 311. The groove 311 may be an 'OIS guide ball accommodation groove'. An OIS guide ball 820 may be disposed in the groove 311. The groove 311 may be in direct contact with the OIS guide ball 820. The groove 311 may be defined concavely in the bottom surface of the OIS movable part 300. The groove 311 may be defined concavely in the bottom surface of the OIS carrier 310. The groove 311 may be defined in the direction perpendicular to the optical axis. The groove 311 may be recessed in the optical axis direction. The groove 311 may comprise a plurality of grooves. The groove 311 may comprise four grooves. The groove 311 may be defined in the bottom surface of the OIS carrier 310.

The OIS carrier 310 may comprise a side stopper. The side stopper may limit lateral stroke of the OIS carrier 310. That is, when the OIS carrier 310 moves maximally, the side stopper of the OIS carrier 310 may be in contact with at least one of the AF carrier 210 or the base 110. The side stopper may be disposed on an outer surface of the OIS carrier 310. The side stopper may protrude outward from the side surface of the OIS carrier 310.

The OIS carrier 310 may comprise a protrusion 312. The protrusion 312 may be coupled to the elastic member 830. The protrusion 312 may be a 'coupling protrusion'. The elastic member 830 may comprise a hole into which the protrusion 312 of the OIS carrier 310 is inserted. The protrusion 312 may be disposed on the top surface of the OIS carrier 310.

The OIS carrier 310 may comprise a groove 313. The groove 313 may be a 'lens adhesive accommodation groove'. The groove 313 may be defined in the inner surface of the OIS carrier 310. The groove 313 may be defined concavely in the inner surface of the OIS carrier 310. An adhesive may be injected between the lens and the OIS carrier 310 through the groove 313. The adhesive for bonding the lens to the OIS carrier 310 may be disposed in the groove 313.

The OIS carrier 310 may comprise a mounting part. The mounting part may be a 'magnet mounting part'. Magnets 510 and 620 may be disposed in the mounting part. The mounting part may be provided, for example, as a groove.

The lens driving apparatus 10 may comprise a driving part. The driving part may move the movable part relative to the fixed part 100. The driving part may comprise the AF driving part 400. The driving part may comprise the OIS driving part. The driving part may comprise the OIS-x driving part 500. The driving part may comprise the OIS-y driving part 600. The driving part may comprise a coil and a magnet.

The lens driving apparatus 10 may comprise the AF driving part 400. The AF driving part 400 may move the AF movable part 200 in the optical axis direction. The AF driving part 400 may move the AF carrier 210 in the optical axis direction. The AF driving part 400 may move the AF carrier 210 in the optical axis direction through electromagnetic force. The AF driving part 400 may comprise a coil and a magnet.

In this embodiment, the AF carrier 210 and the OIS carrier 310 may move in the optical axis direction by an interaction between the AF coil 420 and the AF magnet 410. The AF coil 420, the AF carrier 210, and the OIS carrier 310 may move integrally in the optical axis direction.

The lens driving apparatus 10 may comprise an AF magnet 410. The AF driving part 400 may comprise the AF magnet 410. The AF magnet 410 may be an 'AF magnet'. The AF magnet 410 may be a permanent magnet. The AF magnet 410 may be disposed on the fixed part 100. The AF magnet 410 may be disposed on the base 110. The AF magnet 410 may be disposed on the cover 120. The AF magnet 410 may be disposed on the side plate 122 of the cover 120. The AF magnet 410 may be disposed on the outer surface of the base 110. The AF magnet 410 may be disposed on the inner surface of the base 110. The AF magnet 410 may be fixed to the base 110. The AF magnet 410 may be coupled to the base 110. The AF magnet 410 may be bonded to the base 110 with the adhesive. The AF magnet 410 may be disposed within the cover 120. The AF magnet 410 may interact with the AF coil 420. The AF magnet 410 may electromagnetically interact with the AF coil 420. The AF magnet 410 may be disposed at a position corresponding to the AF coil 420. The AF magnet 410 may face the AF coil 420. The AF magnet 410 may face the AF coil 420. The AF magnet 410 may overlap the AF coil 420 in a direction perpendicular to an optical axis.

The AF magnet 410 may be a four-magnetized magnet. The AF magnet 410 may comprise a four-magnetized magnet. The AF magnet 410 may comprise a first magnet part comprising an N pole and an S pole, and a second magnet part comprising an N pole and an S pole. The first magnet part and the second magnet part may be disposed vertically. The first magnet part and the second magnet part may be spaced apart from each other in the vertical direction, and a neutral part may be disposed between the first magnet part and the second magnet part.

The lens driving apparatus 10 may comprise an AF coil 420. The AF driving part 400 may comprise the AF coil 420. The AF coil 420 may interact with the AF magnet 410. The AF coil 420 may face the AF magnet 410. The AF coil 420 may face the AF magnet 410. The AF coil 420 may be disposed at a position corresponding to the AF magnet 410. The AF coil 420 may overlap the AF magnet 410 in a direction perpendicular to the optical axis. The AF coil 420 may be disposed on the inner board 720. The AF coil 420 may be disposed on the AF carrier 210. The AF coil 420 may be disposed in the AF movable part 200.

In this embodiment, the AF coil 420 may move in the optical axis direction. The AF coil 420 may move in the optical axis direction through an interaction with the AF magnet 410. The AF coil 420 may move together with the AF movable part 200. The AF coil 420 may move in the optical axis direction together with the AF movable part 200. During the AF driving, the AF coil 420 may move in the optical axis direction together with the AF movable part 200. The AF coil 420 may be disposed in the AF movable part 200. The AF coil 420 may be fixed to the AF movable part 200. The AF coil 420 may be coupled to the AF movable part 200.

The lens driving apparatus 10 may comprise an AF sensor 430. The AF driving part 400 may comprise the AF sensor 430. The AF sensor 430 may be a Hall sensor. The AF sensor 430 may be disposed on the inner board 720. The AF sensor 430 may detect the AF magnet 410. The AF sensor 430 may detect movement of the AF magnet 410. A movement amount or position of the AF magnet 410, which are detected by the AF sensor 430, may be used for feedback of an auto focus operation.

The AF sensor 430 may be a driver IC. The driver IC may comprise a sensing part. The sensing part may comprise a Hall element (Hall IC). The driver IC may be electrically connected to the AF coil 420. The driver IC may supply current to the AF coil 420.

The AF sensor 430 may be disposed inside the AF coil 420. The AF sensor 430 may overlap a neutral part of the AF magnet 410 in a direction perpendicular to the optical axis. As a modified example, the AF sensor 430 may be disposed outside the AF coil 420. The AF sensor 430 may overlap the AF coil 420 in the optical axis direction. The AF sensor 430 may overlap the AF coil 420 in the direction perpendicular to the optical axis.

The lens driving apparatus 10 may comprise an AF yoke 440. The AF yoke 440 may be disposed at a position corresponding to the AF magnet 410. Attractive force may be applied between the AF yoke 440 and the AF magnet 410. The AF guide ball 810 may be maintained in contact with the base 110 and the AF carrier 210 by the attractive force between the AF yoke 440 and the AF magnet 410. The AF yoke 440 may be disposed on the inner board 720. The AF yoke 440 may be disposed inside the AF coil 420.

The lens driving apparatus 10 may comprise an AF attraction yoke 450. The AF attraction yoke 450 may exert attraction with the AF magnet 410. The AF attraction yoke 450 may be disposed inside the AF coil 420. The AF attraction yoke 450 may be disposed on the inner surface of the side plate 721 of the inner board 720. The AF attraction yoke 450 may pull the AF magnet 410 inward.

The lens driving apparatus 10 may comprise the OIS driving part. The OIS driving part may move the OIS movable part 300 in the direction perpendicular to the optical axis. The OIS driving part may move the OIS carrier 310 in the direction perpendicular to the optical axis. The OIS driving part may move the OIS carrier 310 in the direction perpendicular to the optical axis through electromagnetic force.

The lens driving apparatus 10 may comprise the OIS-x driving part 500. The OIS driving part may comprise an OIS-x driving part 500. The OIS-x driving part 500 may move the OIS carrier 310 in an x-axis direction perpendicular to the optical axis. The OIS-x driving part 500 may move the OIS carrier 310 in the x-axis direction perpendicular to the optical axis through the electromagnetic force. The OIS-x driving part 500 may comprise a coil and a magnet.

In this embodiment, the OIS-x magnet 510 and the OIS-x coil 520 may move the OIS movable part 300 in a first direction perpendicular to the optical axis direction. Here, the first direction may be the x-axis direction. Due to the interaction between the OIS-x coil 520 and the OIS-x magnet 510, the OIS carrier 310 may move in the x-axis direction perpendicular to the optical axis direction. The OIS-x magnet 510 and the OIS carrier 310 may move integrally in the x-axis direction.

The lens driving apparatus 10 may comprise an OIS-x magnet 510. The OIS driving part may comprise the OIS-x magnet 510. The OIS-x magnet 510 may be an 'OIS-x magnet'. The OIS-x magnet 510 may be a permanent magnet. The OIS-x magnet 510 may be disposed on the OIS movable part 300. The OIS-x magnet 510 may be separated from the AF magnet 410. The OIS-x magnet 510 may be disposed on the OIS carrier 310. The OIS-x magnet 510 may be disposed on the outer surface of the OIS carrier 310. The OIS-x magnet 510 may be fixed to the OIS carrier 310. The OIS-x magnet 510 may be coupled to the OIS carrier 310. The OIS-x magnet 510 may be bonded to to the OIS carrier 310 by the adhesive. The OIS-x magnet 510 may be disposed within the cover 120. The OIS-x magnet 510 may interact with the OIS-x coil 520. The OIS-x magnet 510 may electromagnetically interact with the OIS-x coil 520. The OIS-x magnet 510 may be disposed at a position corresponding to the OIS-x coil 520. The OIS-x magnet 510 may face the OIS-x coil 520. The OIS-x magnet 510 may face the OIS-x coil 520. The OIS-x magnet 510 may overlap the OIS-x coil 520 in the direction perpendicular to the optical axis. The OIS-x magnet 510 may overlap the OIS-x coil 520 in the x-axis direction. The OIS-x magnet 510 may move in the x-axis direction perpendicular to the optical axis.

The OIS-x magnet 510 may be a two-pole magnet. The OIS-x magnet 510 may comprise a two-pole magnetized magnet. The OIS-x magnet 510 may comprise an N pole and an S pole.

The lens driving apparatus 10 may comprise an OIS-x coil 520. The OIS driving part may comprise the OIS-x coil 520. The OIS-x coil 520 may interact with the OIS-x magnet 510. The OIS-x coil 520 may move the OIS-x magnet 510 in the x-axis direction perpendicular to the optical axis. The OIS-x coil 520 may move the OIS-x magnet 510 in the x-axis direction through an interaction with the OIS-x magnet 510. The OIS-x coil 520 may face the OIS-x magnet 510. The OIS-x coil 520 may face the OIS-x magnet 510. The OIS-x coil 520 may be disposed at a position corresponding to the OIS-x magnet 510. The OIS-x coil 520 may overlap the OIS-x magnet 510 in the direction perpendicular to the optical axis. The OIS-x coil 520 may be disposed on the inner board 720. The OIS-x coil 520 may be disposed on the AF carrier 210.

In this embodiment, the OIS-x coil 520 may move together with the AF movable part 200. The OIS-x coil 520 may move in the optical axis direction together with the AF movable part 200. During the AF driving, the OIS-x coil 520 may move in the optical axis direction together with the AF movable part 200. The OIS-x coil 520 may be disposed on the AF movable part 200. The OIS-x coil 520 may be fixed to the AF movable part 200. The OIS-x coil 520 may be coupled to the AF movable part 200.

The lens driving apparatus 10 may comprise an OIS-x sensor 530. The OIS driving part may comprise the OIS-x sensor 530. The OIS-x sensor 530 may be disposed on the inner board 720. The OIS-x sensor 530 may comprise a hall sensor. The OIS-x sensor 530 may detect the OIS-x magnet 510. The OIS-x sensor 530 may detect the magnetic force of the OIS-x magnet 510. The OIS-x sensor 530 may be disposed at a lower side of the OIS-x magnet 510. The OIS-x sensor 530 may overlap the OIS-x magnet 510 in the optical axis direction. Alternatively, the OIS-x sensor 530 may be disposed within the OIS-x coil 520. The OIS-x sensor 530 may overlap the OIS-x coil 520 in the optical axis direction. The OIS-x sensor 530 may overlap the OIS-x coil 520 in the direction perpendicular to the optical axis. The OIS-x sensor 530 may face the OIS-x magnet 510. The OIS-x sensor 530 may be disposed at a position corresponding to the OIS-x magnet 510. The OIS-x sensor 530 may detect the movement of the OIS-x magnet 510. An amount of movement or position of the OIS-x magnet 510 detected by the OIS-x sensor 530 may be used for feedback of the optical image stabilization (OIS) driving in the x-axis direction.

The lens driving apparatus 10 may comprise an OIS-x yoke 540. The OIS-x yoke 540 may be disposed on the OIS-x magnet 510. The OIS-x yoke 540 may be disposed between the OIS-x magnet 510 and the OIS carrier 310. The OIS-x yoke 540 may prevent magnetic flux leakage of the OIS-x magnet 510 and improve the interaction with the OIS-x coil 520.

The lens driving apparatus 10 may comprise the OIS-y driving part 600. The OIS driving part may comprise the OIS-y driving part 600. The OIS-y driving part 600 may move the OIS carrier 310 in the y-axis direction perpendicular to both the optical axis and the x-axis direction. The OIS-y driving part 600 may move the OIS carrier 310 in the y-axis direction perpendicular to both the optical axis and the x-axis direction through the electromagnetic force. The OIS-y driving part 600 may comprise a coil and a magnet.

In this embodiment, the OIS-y magnet 610 and the OIS-y coil 620 may move the OIS movable part 300 in a second direction perpendicular to the optical axis direction and the first direction. Here, the second direction may be the y-axis direction. Due to the interaction between the OIS-y coil 620 and the OIS-y magnet 610, the OIS carrier 310 may move in the y-axis direction perpendicular to both the optical axis direction and the x-axis direction. The OIS-y magnet 610 and the OIS carrier 310 may move integrally in the y-axis direction. The OIS-y magnet 610 may overlap the AF magnet 410 in the second direction. The OIS-y magnet 610 may overlap the AF magnet 410 in the y-axis direction.

The lens driving apparatus 10 may comprise the OIS-y magnet 610. The OIS-y driving part 600 may comprise the OIS-y magnet 610. The OIS-y magnet 610 may be an 'OIS-y magnet'. The OIS-y magnet 610 may be a permanent magnet. The OIS-y magnet 610 may be disposed on the OIS movable part 300. The OIS-y magnet 610 may be separated from the OIS-x magnet 510. The OIS-y magnet 610 may be separated from the AF magnet 410. The OIS-y magnet 610 may be disposed on the OIS carrier 310. The OIS-y magnet 610 may be disposed on the outer surface of the OIS carrier 310. The OIS-y magnet 610 may be fixed to the OIS carrier 310. The OIS-y magnet 610 may be coupled to the OIS carrier 310. The OIS-y magnet 610 may be bonded to the OIS carrier 310 by the adhesive. The OIS-y magnet 610 may be disposed within the cover 120. The OIS-y magnet 610 may interact with the OIS-y coil 620. The OIS-y magnet 610 may electromagnetically interact with the OIS-y coil 620. The OIS-y magnet 610 may be disposed at a position corresponding to the OIS-y coil 620. The OIS-y magnet 610 may face the OIS-y coil 620. The OIS-y magnet 610 may face the OIS-y coil 620. The OIS-y magnet 610 may overlap the OIS-y coil 620 in the direction perpendicular to the optical axis. The OIS-y magnet 610 may overlap the OIS-y coil 620 in the y-axis direction. The OIS-y magnet 610 may move in the y-axis direction.

The OIS-y magnet 610 may be a two-pole magnet. The OIS-y magnet 610 may comprise a two-pole magnetized magnet. The OIS-y magnet 610 may comprise an N pole and an S pole.

The lens driving apparatus 10 may comprise the OIS-y coil 620. The OIS-y driving part 600 may comprise the OIS-y coil 620. The OIS-y coil 620 may interact with the OIS-y magnet 610. The OIS-y coil 620 may be disposed at an opposite side of the AF coil 420 on the basis of the optical axis. The OIS-y coil 620 may move the OIS-y magnet 610 in the y-axis direction perpendicular to both the optical axis and the x-axis. The OIS-y coil 620 may move the OIS-y magnet 610 in the y-axis direction through an interaction with the OIS-y magnet 610. The OIS-y coil 620 may face the OIS-y magnet 610. The OIS-y coil 620 may face the OIS-y magnet 610. The OIS-y coil 620 may be disposed at a position corresponding to the OIS-y magnet 610. The OIS-y coil 620 may overlap the OIS-y magnet 610 in the direction perpendicular to the optical axis. The OIS-y coil 620 may be disposed on the inner board 720. The OIS-y coil 620 may be disposed on the AF carrier 210.

In this embodiment, the OIS-y coil 620 may move together with the AF movable part 200. The OIS-y coil 620 may move in the optical axis direction together with the AF movable part 200. During the AF driving, the OIS-y coil 620 may move in the optical axis direction together with the AF movable part 200. The OIS-y coil 620 may be disposed on the AF movable part 200. The OIS-y coil 620 may be fixed to the AF movable part 200. The OIS-y coil 620 may be coupled to the AF movable part 200.

The lens driving apparatus 10 may comprise an OIS-y sensor 630. The OIS-y driving part 600 may comprise the OIS-y sensor 630. The OIS-y sensor 630 may be disposed on the inner board 720. The OIS-y sensor 630 may comprise a Hall sensor. The OIS-y sensor 630 may detect the OIS-y magnet 610. The OIS-y sensor 630 may detect magnetic force of the OIS-y magnet 610. The OIS-y sensor 630 may be disposed at a lower side of the OIS-y magnet 610. The OIS-y sensor 630 may overlap the OIS-y magnet 610 in the optical axis direction. The OIS-y sensor 630 may overlap the OIS-y magnet 610 in the direction perpendicular to the optical axis. Alternatively, the OIS-y sensor 630 may be disposed within the OIS-y coil 620. The OIS-y sensor 630 may overlap the OIS-y coil 620 in the optical axis direction. The OIS-y sensor 630 may face the OIS-y magnet 610. The OIS-y sensor 630 may be disposed at a position corresponding to the OIS-y magnet 610. The OIS-y sensor 630 may detect movement of the OIS-y magnet 610. An amount of movement or position of the OIS-y magnet 610 detected by the OIS-y sensor 630 may be used for feedback of the optical image stabilization (OIS) driving in the y-axis direction.

The lens driving apparatus 10 may comprise an OIS-y yoke 640. The OIS-y yoke 640 may be disposed on the OIS-y magnet 610. The OIS-y yoke 640 may be disposed between the OIS-y magnet 610 and the OIS carrier 310. The OIS-y yoke 640 may prevent magnetic flux leakage of the OIS-y magnet 610 and improve the interaction with the OIS-y coil 620.

When viewed from above, the AF magnet 410, the AF coil 420, the OIS-y magnet 610, and the OIS-y coil 620 may be arranged in sequence on a virtual straight line. When viewed on a top surface, the AF magnet 410, the AF coil 420, the OIS-y magnet 610, and the OIS-y coil 620 may be arranged in sequence on a virtual straight line. When viewed from above, the AF magnet 410, the AF coil 420, the OIS-y magnet 610, and the OIS-y coil 620 may be arranged in sequence. When viewed from above, the AF magnet 410, the AF coil 420, the OIS-y magnet 610, and the OIS-y coil 620 may be arranged in sequence in the y-axis direction. When viewed from above, the AF magnet 410, the AF coil 420, the OIS-y magnet 610, and the OIS-y coil 620 may overlap in the y-axis direction.

The lens driving apparatus 10 may comprise boards 710 and 720. Each of the boards 710 and 720 may comprise a flexible printed circuit board (FPCB). The boards 710 and 720 may be electrically connected to the coils 420, 520, and 620. The boards 710 and 720 may be electrically connected to the sensors 430, 530, and 630.

The lens driving apparatus 10 may comprise an outer board 710. The outer board 710 may be disposed on the base 110. The outer board 710 may be electrically connected to the coils 420, 520, and 620. The outer board 710 may be electrically connected to the sensors 430, 530, and 630. The outer board 710 may connect the AF carrier 210 to the base 110. The outer board 710 may elastically connect the AF carrier 210 to the base 110. The outer board 710 may connect the fixed part 100 to the inner board 720. The outer board 710 may support the AF carrier 210 to be movable relative to the base 110. The outer board 710 may guide the AF carrier 210 to move in the optical axis direction with respect to the base 110. The outer board 710 may comprise a flexible board. The outer board 710 may comprise a flexible printed circuit board (FPCB). The outer board 710 may comprise an elastic portion. The outer board 710 may comprise an elastic member. The outer board 710 may comprise an outer part 711 disposed on the fixed part 100 and a connecting part 712 extending from the outer part 711 and coupled to the inner board 720.

The outer board 710 may comprise the outer part 711. The outer part 711 may be disposed on the base 110. The outer part 711 may be disposed to surround a side surface of the base 110. The outer part 711 may be disposed on three side surfaces of the base 110. The outer part 711 may comprise two terminal parts. The two terminal parts may be disposed to be opposite to each other with respect to the optical axis. Each of the terminal parts may comprise a terminal 711-1.

The outer board 710 may comprise the terminal 711-1. The outer part 711 of the outer board 710 may comprise the terminal 711-1. The terminal 711-1 may be electrically connected to a terminal 712-1. The terminal 711-1 may be disposed on a lower end of the base 110. The terminal 711-1 may be coupled to the printed circuit board 50. The terminal 711-1 may be connected to a terminal of the printed circuit board 50 through solder. The terminal 711-1 may be connected to the terminal of the printed circuit board 50 through a conductive member. The terminal 711-1 may be connected to the terminal of the printed circuit board 50. The terminal 711-1 may be electrically connected to the terminal of the printed circuit board 50.

The outer board 710 may comprise a connecting part 712. The connecting part 712 may be an 'extension part'. The connecting part 712 may be a 'leg part'. The connecting part 712 may extend from the outer part 711. At least a portion of the connecting part 712 may move together with the AF carrier 210. The extension part may extend from the outer part 711. At least a portion of the extension part may move together with the AF carrier 210. At least a portion of the connecting part 712 may be disposed perpendicular to the optical axis direction. The connecting part 712 of the outer board 710 may be coupled to the inner board 720 so that the inner board 720 moves in the optical axis direction. At least a portion of the connecting part 712 may be disposed parallel to the optical axis direction.

The connecting part 712 may comprise a plurality of connecting parts. The connecting part 712 may comprise a first connecting part and a second connecting part. The second connecting part may be disposed below the first connecting part.

The outer board 710 may comprise the terminal 712-1. The connecting part 712 of the outer board 710 may comprise the terminal 712-1. The terminal 712-1 may be coupled to the terminal 721-1 of the inner board 720. The terminal 712-1 of the outer board 710 may be connected to the terminal 721-1 of the inner board 720 through solder. The terminal 712-1 of the outer board 710 may be connected to the terminal 721-1 of the inner board 720 through a conductive member. The terminal 712-1 of the outer board 710 may be connected to the terminal 721-1 of the inner board 720. The terminal 712-1 of the outer board 710 may be electrically connected to the terminal 721-1 of the inner board 720.

The outer board 710 may comprise a bent part 712-2. The bent part 712-2 may be disposed on the connecting part 712. The bent part 712-2 may be disposed on each of the first connecting part and the second connecting part. The bent part 712-2 may comprise a shape that is bent at least twice. The bent part 712-2 may comprise a U-shaped bent shape. The bent part 712-2 may comprise a rounded shape. The bent part 712-2 may comprise a portion disposed parallel to the optical axis.

Hereinafter, one of the 'terminal 711-1' and the 'terminal 712-1' of the outer board 710 may be referred to as a 'first terminal', and the other may be referred to as a 'second terminal'.

The lens driving apparatus 10 may comprise the inner board 720. The inner board 720 may be electrically connected to the coils 420, 520, and 620. The inner board 720 may be electrically connected to the sensors 430, 530, and 630. The inner board 720 may be disposed on the AF movable part 200. The inner board 720 may be disposed on the AF carrier 210. The inner board 720 may be fixed to the AF carrier 210. The inner board 720 may be coupled to the AF carrier 210. The inner board 720 may be bonded to the AF carrier 210 by an adhesive. The inner board 720 may comprise a flexible board. The inner board 720 may comprise a flexible printed circuit board (FPCB). The inner board 720 may comprise an elastic portion. The inner board 720 may comprise an elastic member.

The inner board 720 may be coupled to the bottom surface of the holder member 220. The pre-load member 230 may be coupled to the inner board 720.

The inner board 720 may comprise a side plate 721. The side plate 721 may be disposed on the side surface of the AF carrier 210. The side plate 721 may be disposed on the outer surface of the AF carrier 210. In another embodiment, the side plate 721 may be disposed on the inner surface of the AF carrier 210. The side plate 721 of the inner board 720 may comprise a plurality of portions. The side plate 721 may comprise first to fourth portions.

The inner board 720 may comprise a first portion. The first portion may be disposed on the AF carrier 210. The AF coil 420 may be disposed on the first portion of the inner board 720. The AF sensor 430 may be disposed on the first portion of the inner board 720. The AF yoke 440 may be disposed on the first portion of the inner board 720.

The inner board 720 may comprise a second portion. The second portion may be disposed to be opposite to the first portion. The second portion may be disposed on the AF carrier 210. The second portion may be disposed on a second side surface of the AF carrier 210. The OIS-y coil 620 may be disposed on the second portion of the inner board 720. The OIS-y sensor 630 may be disposed on the second portion of the inner board 720. In more detail, the OIS-y sensor 630 may be disposed on the lower plate 722 that is bent and disposed at an upper side of the second portion of the inner board 720. The OIS-y sensor 630 may be disposed on a bottom surface of the lower plate 722.

The inner board 720 may comprise a third portion. The third portion may be disposed on the AF carrier 210. The third portion may be disposed on a third side surface of the AF carrier 210. The OIS-x coil 520 may be disposed on the third portion of the inner board 720. The OIS-x sensor 530 may be disposed on the third portion of the inner board 720. In more detail, the OIS-x sensor 530 may be disposed on the lower plate 722 that is bent and disposed at an upper side of the third portion of the inner board 720. The OIS-x sensor 530 may be disposed on the bottom surface of the lower plate 722.

The inner board 720 may comprise a fourth portion. The fourth portion may be disposed to be opposite to the third portion. The fourth portion may be disposed on the AF carrier 210. The fourth portion may be disposed on a fourth side surface of the AF carrier 210.

The inner board 720 may comprise the terminal 721-1. The terminal 721-1 may be disposed on the fourth portion of the inner board 720. The terminal 721-1 may be electrically connected to the coils 420, 520, and 620. The terminal 721-1 may be electrically connected to the sensors 430, 530, and 630. The terminal 721-1 may be coupled to the terminal 712-1 of the outer board 710.

The inner board 720 may comprise the terminal 722-1. The terminal 722-1 may be disposed on the lower plate 722 of the inner board 720. The terminal 722-1 may be electrically connected to the coils 420, 520, and 620. The terminal 722-1 may be electrically connected to the sensors 430, 530, and 630. The terminal 722-1 may be coupled to the terminal 712-1 of the outer board 710.

The inner board 720 may comprise a hole 722-2. The terminal 722-1 of the inner board 720 may be soldered to the terminal 712-1 of the outer board 710 through the hole 722-2.

The lens driving apparatus 10 may comprise a guide member. The guide member may comprise a ball. The guide member may comprise a pin. The guide member may comprise a cylindrical member. The guide member may guide the movement of the movable part relative to the fixed part 100 in a specific direction.

The lens driving apparatus 10 may comprise an AF guide ball 810. The AF guide ball 810 may guide the movement of the AF movable part 200 relative to the fixed part 100 in the optical axis direction. The AF guide ball 810 may guide the movement of the AF carrier 210 relative to the base 110 in the optical axis direction. The AF guide ball 810 may be disposed between the fixed part 100 and the AF movable part 200. The AF guide ball 810 may be disposed between the base 110 and the AF carrier 210. The AF guide ball 810 may be disposed between the housing and the base 110. The AF guide ball 810 may be disposed between the base 110 and the AF carrier 210 in the x-axis direction. Alternatively, the AF guide ball 810 may be disposed between the base 110 and the AF carrier 210 in the y-axis direction. The AF guide ball 810 may be disposed in the groove of the base 110. The AF guide ball 810 may be disposed in the groove of the AF carrier 210. The AF guide ball 810 may have a spherical shape. The AF guide ball 810 may be made of a metal. Grease may be applied to a surface of the AF guide ball 810.

The AF guide ball 810 may be disposed at a first corner of the base 110. The AF guide ball 810 may be disposed at a second corner that is diagonally opposite to the first corner of the base 110. The AF guide ball 810 may be disposed at each of the first and second corners of the base 110. A first corner area and a second corner area of the fixed part 100 may be disposed diagonally relative to the optical axis. The AF guide ball 810 may be disposed on each of the first corner area and the second corner area of the fixed part 100. The AF guide ball 810 may be disposed in two sets at each of the first and second corners of the base 110. Here, one set may comprise four balls. The two sets may be disposed at opposite sides of the pillar portion of the AF carrier 210.

As a modified example, the AF guide ball 810 may be disposed at each of the first corner and the third corner. Alternatively, the AF guide ball 810 may be disposed at each of the first corner and the fourth corner. That is, the AF guide ball 810 may not be disposed diagonally.

The AF guide ball 810 may comprise a first unit ball disposed on the first corner area of the fixed part 100 when viewed from above, and a second unit ball disposed on the second corner area that is disposed in a diagonal direction of the first corner area of the fixed part 100. Here, the OIS guide ball 820 may comprise a first guide member and a second guide member, which are spaced apart from each other when viewed from above and are disposed diagonally between the first unit ball and the second unit ball of the AF guide ball 810.

The AF guide ball 810 may comprise a first unit ball and a second unit ball, which are disposed on the first corner area of the fixed part 100 when viewed from above, and a third unit ball and a fourth unit ball, which are disposed on the second corner area that is disposed in the diagonal direction of the first corner area of the fixed part 100. The AF guide balls 810 may be disposed in two sets per corner.

The AF guide ball 810 may comprise a ball that overlaps the OIS guide ball 820 in the direction perpendicular to the optical axis. At least a portion of the AF guide ball 810 may overlap the OIS guide ball 820.

The AF guide ball 810 may comprise an inner ball 811. The inner ball 811 may be disposed on the pillar portion 111 of the base 110. The inner ball 811 may be disposed in the inner groove 111-1 of the base 110. The inner ball 811 may be disposed in the inner groove 224-1 of the AF carrier 210. The inner ball 811 may be disposed in the inner groove 224-1 of the AF movable part 200. The inner ball 811 may be disposed in the inner groove 111-1 of the base 110 and the inner groove 224-1 of the AF carrier 210. The inner ball 811 may be disposed between the inner groove 111-1 of the base 110 and the inner groove 224-1 of the AF carrier 210. The inner ball 811 may be disposed between the AF movable part 200 and the pillar portion 111 of the fixed part 100.

The AF guide ball 810 may comprise an outer ball 812. The outer ball 812 may be disposed on an outer wall portion 112 of the base 110. The outer ball 812 may be disposed in the outer groove 112-1 of the base 110. The outer ball 812 may be disposed in the outer groove 224-2 of the AF carrier 210. The outer ball 812 may be disposed in the outer groove 112-1 of the base 110 and the outer groove 224-2 of the AF carrier 210. The outer ball 812 may be disposed between the outer groove 112-1 of the base 110 and the outer groove 224-2 of the AF carrier 210. The outer ball 812 may be disposed between the outer groove 112-1 of the fixed part 100 and the outer groove 224-2 of the AF movable part 200. The outer ball 812 may be disposed between the AF movable part 200 and the outer wall portion 112 of the fixed part 100.

The inner ball 811 may comprise a plurality of inner balls 811. The plurality of inner balls 811 may be disposed in the optical axis direction. The inner ball 811 may comprise four inner balls 811. The inner ball 811 may comprise first to fourth inner balls. Each of two balls 811 of the four inner balls 811 may have a large diameter, and each of the other two may have a small diameter. The two balls each of which has the larger diameter may be disposed at the uppermost and lowermost sides. That is, the two balls each of which has the small diameter may be disposed between the two balls each of which has the large diameter.

The inner ball 811 may comprise the uppermost inner ball 811-1. The uppermost inner ball 811-1 may be disposed at the highest position among the inner balls 811. The uppermost inner ball 811-1 may be disposed closest to the upper plate 121 of the cover 120 among the inner balls 811. The inner ball 811 may comprise the lowermost inner ball 811-2. The lowermost inner ball 811-2 may be disposed at the lowest position among the inner balls 811. The lowermost inner ball 811-2 may be disposed closest to the lower plate of the base 110 among the inner balls 811. The plurality of inner balls 811 may comprise balls each of which has a diameter less than that of each of the uppermost inner ball 811-1 and the lowermost inner ball 811-2. The plurality of inner balls 811 may comprise balls disposed between the uppermost inner ball 811-1 and the lowermost inner ball 811-2.

The outer ball 812 may comprise a plurality of outer balls 812. The plurality of outer balls 812 may be disposed in the optical axis direction. The outer ball 812 may comprise four outer balls 812. The outer ball 812 may comprise first to fourth outer balls. Each of two of the four outer balls 812 may have a large diameter, and each of the other two may have a small diameter. The two balls each of which has the larger diameter may be disposed at the uppermost and lowermost sides. That is, the two balls each of which has the small diameter may be disposed between the two balls each of which has the large diameter.

The outer ball 812 may comprise the uppermost outer ball 812-1. The uppermost outer ball 812-1 may be disposed at a highest position among the outer balls 812. The uppermost outer ball 812-1 may be disposed closest to the upper plate 121 of the cover 120 among the outer balls 812. The outer ball 812 may comprise the lowermost outer ball 812-2. The lowermost outer ball 812-2 may be disposed at the lowest position among the outer balls 812. The lowermost outer ball 812-2 may be disposed closest to the lower plate of the base 110 among the outer balls 812. The plurality of outer balls 812 may comprise balls each of which has a diameter less than that of each of the uppermost outer ball 812-1 and the lowermost outer ball 812-2. The plurality of outer balls 812 may comprise balls disposed between the uppermost outer ball 812-1 and the lowermost outer ball 812-2.

The AF guide ball 810 may comprise a plurality of balls disposed in the optical axis direction. Here, the plurality of balls may comprise the uppermost balls 811-1 and 812-1, which are disposed at the uppermost side, and the lowermost balls 811-2 and 812-2, which are disposed at the lowermost side. A height of a point at which the elastic member 920 presses the plate member 910 may be disposed between a height of each of the uppermost balls 811-1 and 812-1 and a height of each of the lowermost balls 811-2 and 812-2.

The lens driving apparatus 10 may comprise an OIS guide ball 820. The OIS guide ball 820 may guide the movement of the OIS carrier 310 relative to the AF carrier 210 in the direction perpendicular to the optical axis. The OIS guide ball 820 may be disposed between the AF movable part 200 and the OIS movable part 300. The OIS guide ball 820 may be disposed between the AF carrier 210 and the OIS carrier 310. The OIS guide ball 820 may be disposed between the lower side of the AF carrier 210 and the OIS carrier 310. The OIS guide ball 820 may be disposed between the housing and the bobbin. The OIS guide ball 820 may be disposed between the housing and a lower side of the bobbin. The OIS guide ball 820 may be disposed between the AF carrier 210 and the OIS carrier 310 in the optical axis direction.

The OIS guide ball 820 may be disposed on the protrusion 231 of the pre-load member 230. The OIS guide ball 820 may be disposed in the groove 232 of the protrusion 231. The OIS guide ball 820 may be disposed in the groove 311 of the OIS movable part 300. The OIS guide ball 820 may be disposed between the groove 232 of the protrusion 231 of the AF movable part 200 and the groove 311 of the OIS movable part 300.

The OIS guide ball 820 may be disposed between the pre-load member 230 of the AF carrier 210 and the OIS carrier 310. The OIS guide ball 820 may be pressed between the AF carrier 210 and the OIS carrier 310 by pressing force of the elastic members 830 and 850. The pre-load member 230 may press the OIS guide ball 820 upward during a process of being coupled to the holder member 220. The pre-load member 230 may press the OIS guide ball 820 in the direction of the OIS carrier 310 during a process of being coupled to the holder member 220. Here, the OIS carrier 310 may press the OIS guide ball 820 toward the pre-load member 230 by restoring force of the elastic members 830 and 850. Thus, the OIS guide ball 820 may be pressed between the pre-load member 230 and the OIS carrier 310.

The OIS guide ball 820 may guide the OIS movable part 300 to move in the x-axis direction and the y-axis direction. The OIS guide ball 820 may guide the movement of the OIS movable part 300 in the x-axis and y-axis directions. The OIS guide ball 820 may guide the OIS carrier 310 to move in the x-axis direction and the y-axis direction perpendicular to the optical axis direction with respect to the AF carrier 210. That is, the OIS guide ball 820 may guide the OIS carrier 310 to move in the x-axis direction and the y-axis direction. In other words, the OIS guide ball 820 may guide the movement in both the x-axis and y-axis directions. For reference, when compared to Comparative Example in which the ball guiding the x-axis direction and the ball guiding the y-axis direction are provided separately, a size of the lens driving apparatus 10 may be minimized in this embodiment in which the ball guiding the x-axis direction and the ball guiding the y-axis direction are provided integrally. In particular, a height of the lens driving apparatus 10 in the optical axis direction may be reduced. As a result, a height protruding from a smartphone, i.e., a shoulder height may be minimized. The OIS guide ball 820 may comprise a plurality of balls. The OIS guide ball 820 may comprise four balls.

As a modified example, the OIS guide ball 820 may be provided separately with the ball that guides the x-axis driving and the ball that guides the y-axis driving.

The lens driving apparatus 10 may comprise an elastic member. The elastic member may be formed to support the OIS driving. The elastic member may support the movement of the OIS movable part 300. The elastic member may be provided to press the OIS guide ball 820. The elastic member may be provided to guide both the OIS-x-axis driving and the OIS-y-axis driving using only the OIS guide ball 820. The elastic member may comprise a leaf spring. The elastic member may comprise a wire. The elastic member may have elasticity. The elastic member may be made of a metal.

The elastic member may press the OIS guide ball 820 between the AF movable part 200 and the OIS movable part 300. The elastic member may press the OIS movable part 300 toward the AF movable part 200. The elastic member may press the OIS movable part 300 toward the OIS movable part 300. Here, the elastic member may comprise an elastic member 830 and a wire 850.

The lens driving apparatus 10 may comprise the elastic member 830. The elastic member 830 may be an 'upper elastic member'. The elastic member 830 may be an 'upper spring'. The elastic member 830 may be a leaf spring. The elastic member 830 may have elasticity. The elastic member 830 may be disposed on the OIS movable part 300. The elastic member 830 may be coupled to the OIS movable part 300. The elastic member 830 may be connected to the OIS movable part 300. The elastic member 830 may be coupled to the top surface of the OIS movable part 300. The elastic member 830 may be disposed on the top surface of the OIS movable part 300. The elastic member 830 may be disposed on the upper portion of the OIS carrier 310. The elastic member 830 may be disposed on the OIS carrier 310. The elastic member 830 may be disposed on the upper portion of the OIS carrier 310. The elastic member 830 may be disposed on the OIS carrier 310. The elastic member 830 may be disposed perpendicular to the optical axis.

The elastic member 830 may comprise an inner part 831. The inner part 831 may be coupled to the OIS movable part 300. The elastic member 830 may comprise an outer part 832. The outer part 832 may be coupled to the wire 850. The elastic member 830 may comprise a connecting part 833. The connecting part 833 may connect the inner part 831 to the outer part 832. The connecting part 833 may elastically connect the inner part 831 to the outer part 832. The connecting part 833 may comprise elasticity. The connecting part 833 may be an elastic part. The connecting part 833 may be a 'leg part'.

The inner part 831 of the elastic member 830 may be disposed higher than the outer part 832. The inner part 831 of the elastic member 830 may be disposed higher than the outer part 832. The inner part 831 of the elastic member 830 may be disposed higher than the outer part 832 by a first distance. The reason in which the inner part 831 of the elastic member 830 is disposed higher than the outer part 832 may be due to the pressing force of the pre-load member 230. Due to this structure, the OIS guide ball 820 may be maintained to be in contact with the pre-load member 230 of the AF carrier 210 and the OIS carrier 310.

The OIS carrier 310 may comprise a first area coupled to the elastic member 830. The wire 850 may comprise a second area coupled to the elastic member 830. The first area of the OIS carrier 310 may be disposed above the second area of the wire 850. The first area of the OIS carrier 310 may be disposed to be spaced 0.2 mm to 0.6 mm upward from the second area of the wire 850. The first area of the OIS carrier 310 may be disposed to be spaced 0.3 mm to 0.5 mm upward from the second area of the wire 850.

The lens driving apparatus 10 may comprise the wire 850. The wire 850 may be a 'side elastic member'. The wire 850 may be a wire. The wire 850 may be a wire spring. The wire 850 may be a suspension wire. The wire 850 may have elasticity. The wire 850 may connect the elastic member 830 to the AF carrier 210. The wire 850 may connect the elastic member 830 to the lower side of the AF carrier 210. The wire 850 may connect the elastic member 830 to the housing. The wire 850 may connect the elastic member 830 to the lower side of the housing. The wire 850 may elastically connect the elastic member 830 to the AF carrier 210. The wire 850 may connect the elastic member 830 to the metal member 225 of the AF carrier 210. The wire 850 may elastically connect the elastic member 830 to the metal member 225 of the AF carrier 210. The wire 850 may be disposed parallel to the optical axis. The wire 850 may be disposed in the optical axis direction.

An upper end of the wire 850 may be coupled to the elastic member 830. A first portion of the wire 850 may be coupled to the elastic member 830. A lower end of the wire 850 may be coupled to the AF movable part 200. The lower end of the wire 850 may be coupled to the bottom surface of the AF movable part 200. A second portion of the wire 850 may be coupled to the AF movable part 200. The lower end of the wire 850 may be coupled to the AF carrier 210. The lower end of the wire 850 may be coupled to the holder member 220. The lower end of the wire 850 may be coupled to the metal member 225. The lower end of the wire 850 may be soldered to the metal member 225. The lower end of the wire 850 may be welded to the metal member 225. The lower end of the wire 850 may be coupled to the metal member 225 by conductive epoxy. The lower end of the wire 850 may be connected to the metal member 225 through a conductive material. The lower end of the wire 850 may be directly coupled to the metal member 225. The wire 850 may connect the elastic member 830 to the AF movable part 200. The wire 850 may connect the elastic member 830 to the AF carrier 210. The wire 850 may connect the elastic member 830 to the holder member 220. The wire 850 may connect the elastic member 830 to the metal member 225.

The lens driving apparatus 10 may comprise a pressing member. The pressing member may be an 'AF guide ball pressing member.' The pressing member may press the AF guide ball 810. The pressing member may be configured to press the ball. The AF guide ball 810 pressed by the pressing member may be sandwiched between the fixed part 100 and the AF movable part 200. The AF guide ball 810 pressed by the pressing member may be sandwiched between the base 110 and the AF carrier 210. The pressing member may maintain the AF guide ball 810 to be in contact with the fixed part 100 and the AF movable part 200. The pressing member may maintain the AF guide ball 810 to be in contact with the base 110 and the AF carrier 210.

The lens driving apparatus 10 may comprise a plate member 910. The pressing member may comprise the plate member 910. The plate member 910 may be disposed on the AF guide ball 810. The plate member 910 may be in contact with the AF guide ball 810. The plate member 910 may be disposed on the elastic member 920. The plate member 910 may be disposed on the base 110. The plate member 910 may be disposed between the elastic member 920 and the AF guide ball 810. The plate member 910 may press the AF guide ball 810 toward the AF carrier 210 by the elastic member 920. The plate member 910 may be disposed between the AF guide ball 810 and the fixing member 100. The plate member 910 may be disposed between the inner ball 811 and the pillar portion 111 of the fixed member 100.

The lens driving apparatus 10 may comprise the elastic member 920. The pressing member may comprise the elastic member 920. The elastic member 920 may be a spring. The elastic member 920 may be a tapered spring. The elastic member 920 may be disposed on the fixed part 100. The elastic member 920 may press the AF guide ball 810 toward the AF movable part 200. The elastic member 920 may press the plate member 910 toward the AF guide ball 810. The elastic member 920 may be disposed between the plate member 910 and the fixed member 100. The elastic member 920 may push the plate member 910 against the fixed member 100. The elastic member 920 may press the plate member 910 in the opposite direction to the fixed member 100. The elastic member 920 may be disposed between the plate member 910 and the pillar portion 111 of the fixed member 100. The elastic member 920 may be disposed in the inner groove 111-1 of the fixed member 100. The elastic member 920 may press the AF guide ball 810 between the fixed part 100 and the AF movable part 200.

As a modified example, the elastic member 920 may be disposed on the AF movable part 200. Here, the elastic member 920 may press the AF guide ball 810 toward the fixed part 100. The elastic member 920 may be disposed on one of the fixed part 100 and the AF movable part 200 to press the AF guide ball 810 toward the other of the fixed part 100 and the AF movable part 200. The elastic member 920 may press the plate member 910. The elastic member 920 may be disposed between the plate member 910 and the base 110. The elastic member 920 may be disposed between the AF guide ball 810 and the base 110. The elastic member 920 may be disposed on the base 110. The elastic member 920 may be disposed in the inner groove 111-1 of the base 110. The elastic member 920 may press the AF guide ball 810 toward the AF carrier 210. As a result, the AF guide ball 810 may be maintained to be in contact with the plate member 910 and the AF carrier 210.

The elastic member 920 may comprise a bent part. The bent part may comprise a bent shape. The bent part may comprise a plurality of bent parts. The bent part may comprise three bent parts. The elastic member 920 may be bent at least three times. The elastic member 920 may comprise an upper bent part 921. The elastic member 920 may comprise a lower bent part 922. The elastic member 920 may comprise a connecting bent part 923. The connecting bent part 923 may be disposed between the upper bent part 921 and the lower bent part 922. The upper bent part 921 may have an obtuse angle. The lower bent part 922 may have an obtuse angle. The connecting bent part 923 may have an obtuse angle. The upper bent part 921 may be disposed on the fixed part 100. The lower bent part 922 may be disposed on the fixed part 100. The connecting bent part 923 may be disposed on the plate member 910. Due to this structure, the elastic member 920 may push the plate member 910 against the fixed member 100. The connecting bent part 923 may be in contact with the plate member 910 to press the plate member 910 toward the AF guide ball 810.

A height of a point at which the elastic member 920 presses the plate member 910 may be lower than a height of the ball disposed at a lower position among the uppermost inner ball 811-1 and the uppermost outer ball 812-1 and higher than a height of the ball disposed at a higher position among the lowermost inner ball 811-2 and the lowermost outer ball 812-2. In more detail, as in (a) of FIG. 36, when the AF movable part 200 moves upward, a height (b) of a point at which the elastic member 920 presses the plate member 910 may be higher than a height (a) of the ball that is disposed at a higher position among the lowermost inner ball 422 and the lowermost outer ball 412. There may be a gap c in height between the two points. In addition, when the AF movable part 200 moves downward as in (b) of FIG. 36, a height e of a point at which the elastic member 920 presses the plate member 910 may be lower than a height d of the ball that is disposed at a lower position among the uppermost inner ball 421 and the uppermost outer ball 411. There may be a gap f in height between the two points. As a result, a moment generated when the elastic member 920 presses the plate member 910 may be prevented or minimized. That is, a phenomenon in which the plate member 910 is tilted or separated may be prevented.

The lens driving apparatus 10 may comprise a reinforcing member 930. The reinforcing member 930 may be disposed on the base 110. The reinforcing member 930 may be disposed to reinforce strength of the base 110. The reinforcing member 930 may prevent the base 110 from being damaged. The reinforcing member 930 may prevent the pillar portion 111 of the base 110 from being damaged. The reinforcing member 930 may prevent the outer wall portion 112 of the base 110 from being damaged. The reinforcing member 930 may have elasticity. The reinforcing member 930 may be made of a metal. The reinforcing member 930 may comprise a shape that is bent at least twice. The reinforcing member 930 may be provided in a ' 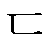 ' shape when viewed from above. The reinforcing member 930 may be opened inward.

The reinforcing member 930 may comprise an inner part 931. The inner part 931 may be disposed at an opposite side of the inner groove 111-1 of the pillar portion 111 of the fixed part 100. The reinforcing member 930 may comprise an outer part 932. The outer part 932 may be disposed at an opposite surface of the outer groove 112-1 of the outer wall portion 112 of the fixed part 100. The reinforcing member 930 may comprise a connecting part 933. The connecting part 933 may connect the inner part 931 to the outer part 932.

The lens driving apparatus 10 may comprise a lid 940. The cover 940 may be disposed on the AF guide ball 810. The cover 940 may overlap the AF guide ball 810 in the optical axis direction. The cover 940 may overlap the inner ball 811 in the optical axis direction. The cover 940 may overlap the outer ball 812 in the optical axis direction. The cover 940 may be disposed on the inner groove 224-1 and the outer groove 224-2 of the AF carrier 210 to prevent the AF guide ball 810 from moving upward.

In this embodiment, one side of the wire 850 may be coupled to the AF movable part 200 that is fixed during the OIS driving to reduce characteristics of the wire 850 vibrating as a mass point.

In this embodiment, the base 110, the pre-load member 230, the inner board 720, the holder member 220, and the OIS carrier 310 may be disposed in sequence from the lower side. In this embodiment, the base 110, the pre-load member 230, the inner board 720, the holder member 220, and the OIS carrier 310 may be stacked in sequence from the lower side. In this embodiment, a stable coupling surface with the lens module 20 may be secured through the stacking direction. In this embodiment, as illustrated in FIG. 27, a rib 21 of the lens module 20 may be disposed in the groove 313 of the OIS carrier 310.

Hereinafter, the configuration of the lens driving apparatus according to a modified example is described with reference to the drawings.

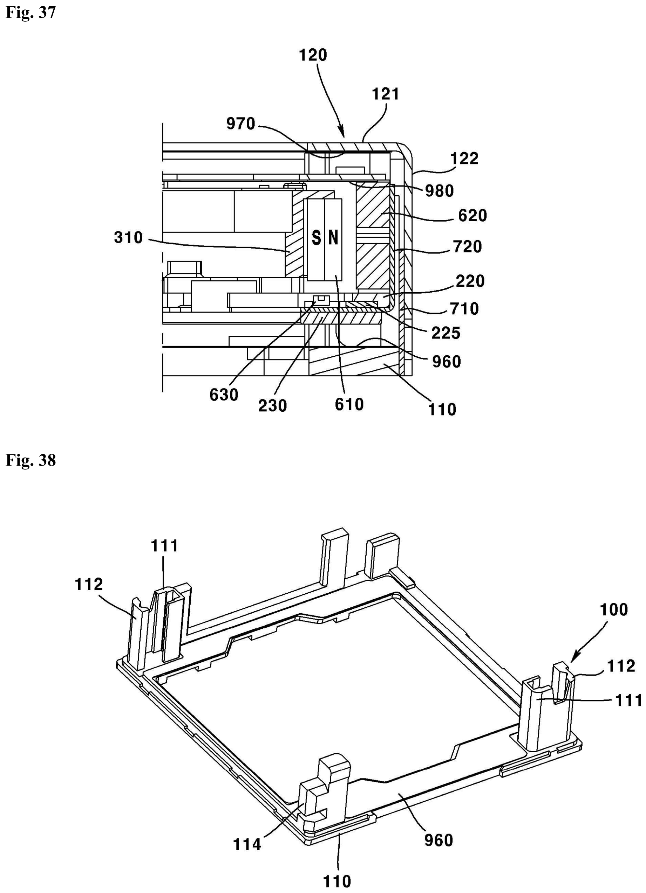

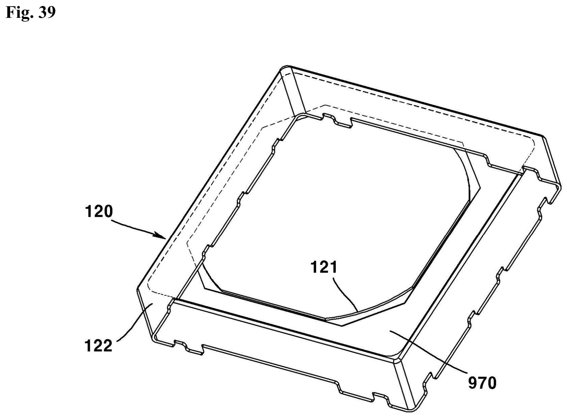

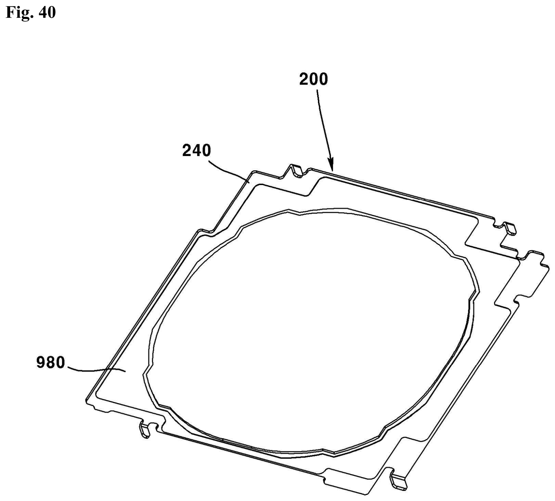

FIG. 37 is a cross-sectional view of a lens driving apparatus according to a modified example. FIG. 38 is a perspective view illustrating a base and a base buffer member of the lens driving apparatus according to the modified example. FIG. 39 is a perspective view illustrating a cover and a cover buffer member of the lens driving apparatus according to the modified example. FIG. 40 is a perspective view illustrating a lid and a lid buffer member of the lens driving apparatus according to the modified example.

A lens driving apparatus according to a modified example may comprise a base buffer member 960. The base buffer member 960 may be disposed on a base 110. The base buffer member 960 may be fixed to the base 110. The base buffer member 960 may be coupled to the base 110. The base buffer member 960 may be bonded to the base 110 by an adhesive. The base buffer member 960 may be disposed on a top surface of the base 110. The base buffer member 960 may minimize an impact of the AF movable part 200 colliding with the base 110.

At least a portion of the base buffer member 960 may be disposed between a pre-load member 230 and the base 110 in an optical axis direction. At least a portion of the base buffer member 960 may be disposed between the pre-load member 230 and the base 110. The base buffer member 960 may comprise poron.

The lens driving apparatus according to the modified example may comprise a cover buffer member 970. The cover buffer member 970 may be disposed on the cover 120. The cover buffer member 970 may be disposed on an upper plate 121 of the cover 120. The cover buffer member 970 may be fixed to the upper plate 121 of the cover 120. The cover buffer member 970 may be coupled to the upper plate 121 of the cover 120. The cover buffer member 970 may be bonded to the upper plate 121 of the cover 120 by an adhesive. The cover buffer member 970 may be disposed on a bottom surface of the upper plate 121 of the cover 120. The cover buffer member 970 may minimize an impact of the AF movable part 200 colliding with the cover 120.

At least a portion of the cover buffer member 970 may be disposed between the upper plate 121 of the cover 120 and the AF movable part 200 in the optical axis direction. At least a portion of the cover buffer member 970 may be disposed between the upper plate 121 of the cover 120 and the AF movable part 200. The cover buffer member 970 may comprise poron.

The lens driving apparatus according to the modified example may comprise a lid buffer member 980. The lid buffer member 980 may be disposed on a lid 240. The lid buffer member 980 may be fixed to the lid 240. The lid buffer member 980 may be coupled to the lid 240. The lid buffer member 980 may be bonded to the lid 240 by an adhesive. The lid buffer member 980 may be disposed on a bottom surface of the lid 240. The lid buffer member 980 may minimize an impact of the OIS movable part 300 colliding with the lid 240.

The lid buffer member 980 may be disposed at least partially in the optical axis direction between the lid 240 and the OIS movable part 300. At least a portion of the lid buffer member 980 may be disposed between the lid 240 and the OIS movable part 300. The lid buffer member 980 may comprise poron.

Hereinafter, the auto focus (AF) driving of the lens driving apparatus according to this embodiment is described with reference to the drawings.

FIGS. 41 to 43 are views for explaining auto focus driving of the lens driving apparatus according to this embodiment. FIG. 41 is a cross-sectional view illustrating a configuration of the movable part in an initial state in which current is not applied to an AF coil. FIG. 42 is a cross-sectional view illustrating a state in which forward current is applied to the AF coil so that the movable part moves upward in an optical axis direction. FIG. 43 is a cross-sectional view illustrating a state in which reverse current is applied to the AF coil so that the movable part moves downward in the optical axis direction.

As illustrated in FIG. 41, the movable part may be disposed at a position spaced apart from both the upper plate 121 of the cover 120 and the base 110 at an initial position at which no current is applied to the AF coil 420. Here, the movable part may be the AF movable part 200. In addition, the movable part may comprise the AF movable part 200 and the OIS movable part 300.

When forward current is applied to the AF coil 420, the AF coil 420 may move upward in the optical axis direction due to the electromagnetic interaction between the AF coil 420 and the AF magnet 410 (see A of FIG. 42). Here, the AF carrier 210 together with the AF coil 420 may move upward in the optical axis direction. Furthermore, the OIS carrier 310 and the lens together with the AF carrier 210 may move upward in the optical axis direction. Thus, a distance between the lens and the image sensor may be changed, so that a focus of an image formed on the image sensor through the lens may be adjusted.

When reverse current is applied to the AF coil 420, the AF coil 420 may move downward in the optical axis direction due to the electromagnetic interaction between the AF coil 420 and the AF magnet 410 (see B of FIG. 43). Here, the AF carrier 210 together with the AF coil 420 may move downward in the optical axis direction. Furthermore, the OIS carrier 310 and the lens together with the AF carrier 210 may move downward in the optical axis direction. Thus, a distance between the lens and the image sensor may be changed, so that a focus of an image formed on the image sensor through the lens may be adjusted.

During the movement of the AF coil 420, the AF sensor 430 may move together with the AF coil 420 and detect strength of a magnetic field of the AF magnet 410 to detect an amount of movement or position of the lens in the optical axis direction. The amount of movement or position of the lens in the optical axis direction, which are detected by the AF sensor 430, may be used for an auto focus feedback control.

Hereinafter, optical image stabilization (OIS) driving of the lens driving apparatus according to this embodiment is described with reference to the drawings.

FIGS. 44 to 46 are views for explaining the optical image stabilization driving of the lens driving apparatus according to this embodiment. FIG. 44 is a cross-sectional view illustrating the OIS movable part in an initial state in which current is not applied to the OIS-x coil and the OIS-y coil. FIG. 45 is a cross-sectional view illustrating a state in which the OIS movable part moves in the x-axis direction perpendicular to the optical axis by applying current to the OIS-x coil. FIG. 46 is a cross-sectional view illustrating a state in which the OIS movable part moves in the y-axis direction perpendicular to the optical axis and the x-axis by applying current to the OIS-x coil.

As illustrated in FIG. 44, the movable part may be disposed at the initial position without current being applied to the OIS-x coil 520 and the OIS-y coil 620. Here, the movable part may be the OIS movable part 300.

When the current is applied to the OIS-x coil 520, the OIS-x magnet 510 may move in the x-axis direction perpendicular to the optical axis due to the electromagnetic interaction between the OIS-x coil 520 and the OIS-x magnet 510 (see A of FIG. 45). Here, the OIS carrier 310 may move in the x-axis direction together with the OIS-x magnet 510. Furthermore, the lens may move in the x-axis direction together with the OIS carrier 310. In more detail, when the forward current is applied to the OIS-x coil 520, the OIS-x magnet 510, the OIS carrier 310, and the lens may move in one direction along the x-axis. In addition, when the reverse current is applied to the OIS-x coil 520, the OIS-x magnet 510, the OIS carrier 310, and the lens may move in the other direction along the x-axis.

When the current is applied to the OIS-y coil 620, the OIS-y magnet 610 may move in the y-axis direction perpendicular to the optical axis due to the electromagnetic interaction between the OIS-y coil 620 and the OIS-y magnet 610 (see B of FIG. 46). Here, the OIS carrier 310 may move in the y-axis direction together with the OIS-y magnet 610. Furthermore, the lens may move in the y-axis direction together with the OIS carrier 310. In more detail, when the forward current is applied to the OIS-y coil 620, the OIS-y magnet 610, the OIS carrier 310, and the lens may move in one direction along the y-axis. In addition, when the reverse current is applied to the OIS-y coil 620, the OIS-y magnet 610, the OIS carrier 310, and the lens may move in the other direction along the y-axis.

The OIS-x sensor 530 may detect strength of the magnetic field of the OIS-x magnet 510 to detect an amount of movement or position of the OIS-x magnet 510. The movement amount or position detected by the OIS-x sensor 530 may be used for the closed-loop auto focus control in the x-axis direction. The OIS-y sensor 630 may detect the strength of the magnetic field of the OIS-y magnet 610 and thus detect the amount of movement or position of the OIS-y magnet 610. The movement amount or position detected by the OIS-y sensor 630 may be used for the closed-loop auto focus control in the y-axis direction.

Hereinafter, a camera device according to this embodiment is described with reference to the drawings.

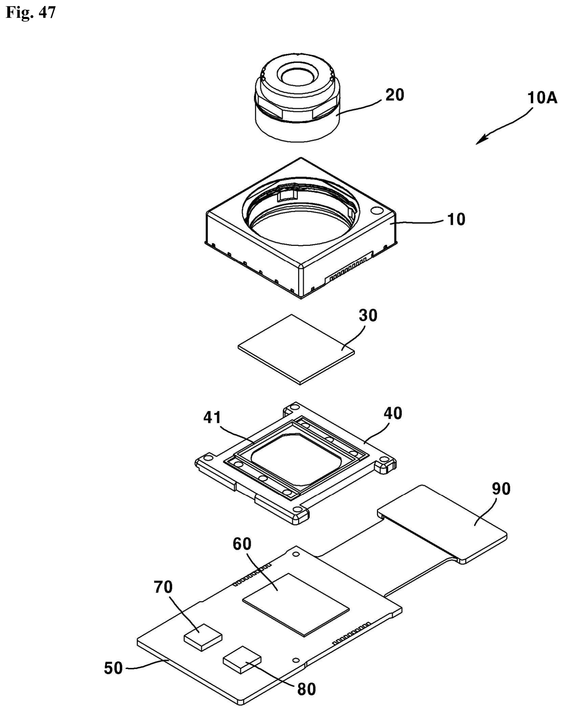

FIG. 47 is an exploded perspective view of a camera device according to this embodiment.

The camera device 10A may comprise the camera module.

The camera device 10A may comprise the lens module 20. The lens module 20 may comprise at least one lens. The lens may be disposed at a position corresponding to the image sensor 60. The lens module 20 may comprise a lens and a barrel. The lens module 20 may be coupled to the OIS carrier 310 of the lens driving apparatus 10. The lens module 20 may be coupled to the OIS carrier 310 by screw coupling and/or an adhesive. The lens module 20 may move integrated with the OIS carrier 310.

The camera device 10A may comprise a filter 30. The filter 30 may serve to block light having a specific frequency band from passing through the lens module 20 from being incident into the image sensor 60. The filter 30 may be disposed parallel to a x-y plane. The filter 30 may be disposed between the lens module 20 and the image sensor 60. The filter 30 may be disposed on a sensor base 40. As a modified example, the filter 30 may be disposed on the base 110. The filter 30 may comprise an infrared filter. The infrared filter may block light in an infrared area from being incident into the image sensor 60.

The camera device 10A may comprise the sensor base 40. The sensor base 40 may be disposed between the lens driving apparatus 10 and the printed circuit board 50. The sensor base 40 may comprise a protrusion 41 on which the filter 30 is disposed. An opening may be defined in a portion of the sensor base 40 on which the filter 30 is disposed so that light passing through the filter 30 is incident into the image sensor 60. An adhesive member may bond or adhere the base 110 of the lens driving apparatus 10 to the sensor base 40. The adhesive member may additionally serve to prevent foreign substances from being introduced into the lens driving apparatus 10. The adhesive material may comprise one or more of epoxy, a thermosetting adhesive, and a UV-curable adhesive.

The camera device 10A may comprise a printed circuit board (PCB) 50. The printed circuit board 50 may be a board or a circuit board. The lens driving apparatus 10 may be disposed on the printed circuit board 50. The sensor base 40 may be disposed between the printed circuit board 50 and the lens driving apparatus 10. The printed circuit board 50 may be electrically connected to the lens driving apparatus 10. The image sensor 60 may be disposed on the printed circuit board 50. The printed circuit board 50 may be provided with various circuits, components, controllers, etc. to convert an image formed on the image sensor 60 into an electrical signal and transmit the electrical signal to an external device.

The camera device 10A may comprise the image sensor 60. The image sensor 60 may be configured to form an image by the incident light passing through the lens and the filter 30. The image sensor 60 may be mounted on the printed circuit board 50. The image sensor 60 may be electrically connected to the printed circuit board 50. For example, the image sensor 60 may be coupled to the printed circuit board 50 using a surface mounting technology (SMT). As another example, the image sensor 60 may be coupled to the printed circuit board 50 by a flip chip technology. The image sensor 60 may be disposed so that the optical axis is aligned with the lens. That is, the optical axis of the image sensor 60 and the optical axis of the lens may be aligned with each other. The image sensor 60 may convert light irradiated onto an effective image area of the image sensor 60 into an electrical signal. The image sensor 60 may be any one of a charge coupled device (CCD), a metal oxide semi-conductor (MOS), a CPD, and a CID.

The camera device 10A may comprise a motion sensor 70. The motion sensor 70 may be mounted on the printed circuit board 50. The motion sensor 70 may be electrically connected to a controller 80 through a circuit pattern provided on the printed circuit board 50. The motion sensor 70 may output rotational angular velocity information due to the movement of the camera device 10A. The motion sensor 70 may comprise a two-axis or three-axis gyro sensor or an angular velocity sensor.

The camera device 10A may comprise the controller 80. The controller 80 may be disposed on the printed circuit board 50. The controller 80 may be electrically connected to the coil 330 of the lens driving apparatus 10. The controller 80 may individually control a direction, intensity, and amplitude of current supplied to the coil 330. The controller 80 may control the lens driving apparatus 10 to perform the auto focus function and/or the optical image stabilization function. Furthermore, the controller 80 may perform the auto focus feedback control and/or the closed-loop auto focus control for the lens driving apparatus 10.

The camera device 10A may comprise a connector 90. The connector 90 may be electrically connected to the printed circuit board 50. The connector 90 may comprise a port for electrical connection with an external device.

Hereinafter, an optical device according to this embodiment is described with reference to the drawings.

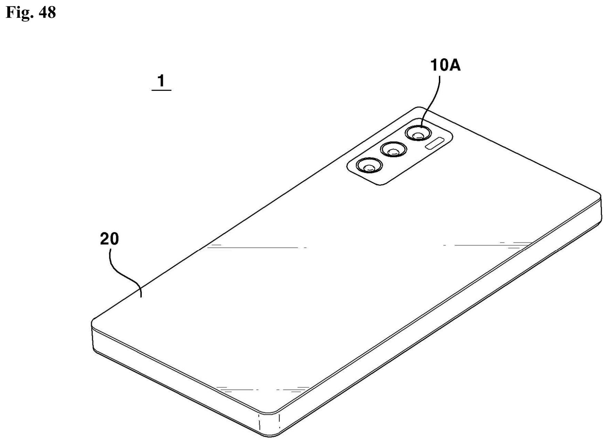

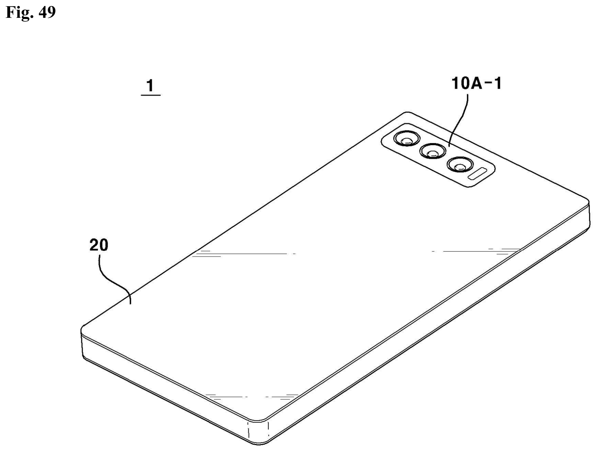

FIG. 48 is a perspective view of an optical device according to this embodiment, and FIG. 49 is a perspective view illustrating an optical device according to a modified example.

An optical device 1 may comprise one or more of a mobile phone, a cellular phone, a portable terminal, a mobile terminal, a smart phone, a smart pad, a portable smart device, a digital camera, a laptop computer, a digital broadcasting terminal, a personal digital assistants (PDA), a portable multimedia player (PMP), and a navigation device. The optical device 1 may comprise any device for photographing images or photographs.

The optical device 1 may comprise a body 20. The optical device 1 may comprise a camera device 10A. The camera device 10A may be disposed on the body 20. The camera device 10A may photograph a subject. The optical device 1 may comprise a display. The display may be disposed on the body 20. The display may output one or more of images and videos captured by the camera device 10A. The display may be disposed on a first surface of the body 20. The camera device 10A may be disposed on at least one of a first side surface of the body 20 or a second side surface opposite to the first side surface. As illustrated in FIG. 48, the camera device 10A may be provided with a triple camera disposed in a vertical direction. As illustrated in FIG. 49, the camera device 10A-1 may have a triple camera disposed in a horizontal direction.

Although the embodiment of the inventive concept is described with reference to the accompanying drawings, those with ordinary skill in the technical field of the inventive concept pertains will be understood that the present disclosure may be carried out in other specific forms without changing the technical idea or essential features. Therefore, the above-disclosed embodiments are to be considered illustrative and not restrictive.

## Claims

1. A lens driving apparatus comprising:
a base;
a housing disposed on the base;
a bobbin disposed in the housing;
a first ball disposed between the housing and the base;
a second ball disposed between the housing and a lower side of the bobbin;
an elastic member coupled with an upper side of the bobbin; and
a wire connecting the elastic member to a lower side of the housing.

2. The lens driving apparatus of claim 1, wherein the base comprises a first guide configured to guide the first ball so that the first ball moves.

3. The lens driving apparatus of claim 2, wherein the housing comprises a second guide, which is configured to guide the first ball so that the first ball moves, on a side surface thereof.

4. The lens driving apparatus of claim 3, wherein each of the first guide and the second guide comprises a groove.

5. The lens driving apparatus of claim 1, wherein the housing comprises a first housing comprising a lower plate having a metal member, and a second housing coupled with the first housing and having a protrusion configured to guide the second ball.

6. The lens driving apparatus of claim 5, comprising a first board disposed between the first housing and the second housing,
wherein the first board is coupled with a lower surface of the first housing, and
wherein the second housing is coupled with the first board.

7. The lens driving apparatus of claim 5, wherein the second housing is configured to press a portion of the elastic member by being in contact with the second ball.

8. The lens driving apparatus of claim 1, wherein the elastic member comprises an inner part coupled with the bobbin, an outer part coupled with the wire, and a connecting part connecting the inner part to the outer part, and
wherein the inner part of the elastic member is disposed above the outer part.

9. The lens driving apparatus of claim 1, wherein the bobbin comprises a first area coupled with the elastic member,
wherein the wire comprises a second area coupled with the elastic member, and
wherein the first area of the bobbin is disposed above the second area of the wire.

10. A lens driving apparatus comprising:
a fixed part;
a first movable part disposed on the fixed part;
a second movable part disposed in the first movable part;
a first driving part configured to move the first movable part in an optical axis direction;
a second driving part configured to move the second movable part in a direction perpendicular to the optical axis direction;
a first ball disposed between the first movable part and the second movable part;
an elastic member coupled with an upper surface of the second movable part;
and
a wire disposed in the optical axis direction,
wherein an upper end part of the wire is coupled with the elastic member, and
wherein a lower end part of the wire is coupled with a lower surface of the first movable part.
